(19) **Europäisches Patentamt**

**European Patent Office**

**Office européen des brevets**

(11) **EP 0 195 219 B2**

(12) # NEW EUROPEAN PATENT SPECIFICATION

(45) Date of publication and mention
of the opposition decision:
**20.08.1997 Bulletin 1997/34**

(45) Mention of the grant of the patent:
**10.04.1991 Bulletin 1991/15**

(21) Application number: **86101510.5**

(22) Date of filing: **06.02.1986**

(51) Int Cl.⁶: **H01F 1/04**, H01F 1/08

(54) **Quenched permanent magnetic material**

Abgeschrecktes permanentmagnetisches Material

Matériau trempé magnétique permanent

(84) Designated Contracting States:
**CH DE FR GB IT LI NL SE**

(30) Priority: **25.11.1985 US 801996**
**25.02.1985 US 707343**
**25.02.1985 US 705263**
**10.01.1986 US 816778**

(43) Date of publication of application:
**24.09.1986 Bulletin 1986/39**

(73) Proprietor: **Ovonic Synthetic Materials Company, Inc.**
**Troy Michigan 48084 (US)**

(72) Inventors:
- **Bergeron, Richard**
  **Romulus Michigan 48174 (US)**
- **Canavan, Karen**
  **Westland Michigan 48185 (US)**
- **McCallum, William R.**
  **Birmingham Michigan 48009 (US)**
- **Keem, John**
  **Bloomfield Hills Michigan 48013 (US)**

(74) Representative:
**Müller, Hans-Jürgen, Dipl.-Ing. et al**
**Müller, Schupfner & Gauger**
**Postfach 10 11 61**
**80085 München (DE)**

(56) References cited:
**EP-A- 0 101 552          EP-A- 0 108 474**
**EP-A- 0 124 655**

- **JOURNAL OF APPLIED PHYSICS, vol. 55, no. 6, part IIA, March 1984, pages 2073-2077, American Institute of Physics, New York, US; G.C. HADJIPANAYIS: "Cobalt-free permanent magnet materials based on iron-rare-earth alloys (invited)"**
- **JP-A-60-9852 and English translation, corresponding to EP-B-144112**
- **GM II, J. Appl. Phys., Vol. 57 (April 1985), No. 1, pp. 4086-4090**
- **J. od Magnetism and Magnetic Materials 1986, pages 450, 451, received 29.12.93**
- **MRS Bulletin June 1988, pages 37-39 (no prior art)**

**Description**

BACKGROUND OF THE INVENTION

There has long been a need for a relatively inexpensive, strong, permanent magnet. Such permanent magnets would be characterized by relatively high magnetic parameters, e.g. coercive force ($H_c$) or coercivity, remanent magnetization or remanence, and maximum energy product.

The prior art teaches that good permanent magnetic materials, e.g., having maximum magnetic energy products above about 15 megagaussoersteds, consist of a conglomeration of non-interacting substantially crystallographically oriented uniaxial particles. When a sufficiently large magnetic field is applied in a given direction, but individual vector magnetizations of each of these particles point along the applied field, corresponding to the maximum or saturation value of the net magnetization, $M_s$. As the applied magnetic field is reduced to zero, the vector magnetization of each particle relaxes back to the easy magnetic axis of the particle, so that the net resultant remanent magnetization, $M_r$, may be less than $M_s$.

This is more fully elucidated by the following geometrical model, in which the "easy axis" of magnetization lies along a preferred axis, c. For an isolated uniformly magnetized particle, the magnetization vector, M, lies along the c axis for a zero applied field. If a field is applied in an arbitrary direction z, the magnetization is rotated away from the c axis until, at sufficiently large fields, M is parallel to z and $M_z$ is equal to $M_s$. When the field is removed, the magnetization relaxes back parallel to the c axis, subject to the condition that the projection of magnetization along the c axis is positive.

E.C. Stoner and E.V. Wohlfarth, Phil. Trans. Royal Soc. (London), A. 240, 599 (1948) have calculated the hysteresis loop for such a particle for different orientations of the c axis with respect to z. For the case of a sample comprising a large number of such non-interacting particles oriented along some direction, the magnetic properties for the material or sample are the sum or average of the properties of the individual particles. Such a sample or material is hereinafter referred to as an anisotropic material. Anisotropic materials have at least one magnetic property which is a strong function of the direction of measurement. Such materials are characterized by a single "easy direction" of magnetization, where the value of the property greatly exceeds the value in other directions of magnetization. If the particles are non-interacting, the maximum energy product varies from a maximum value of 0.25 $(M_s)^2$, when z is parallel to the c axis, to 0 when z is perpendicular to the c axis. For a theoretical anisotropic material with $M_s$ equal to 16 and $H_c$ chosen to be greater than $M_s$, the maximum theoretical value of the energy product of the hysteresis loop is 64 megagaussoersteds.

Stoner and Wohlfarth have carried out the same method of analysis for an ideal array of randomly oriented non-interacting uniformly magnetized particles. Since the array is isotropic there is no dependence of the hysteresis loop on the direction of the applied field. The maximum theoretical value of the energy product of such a loop is dependent on $M_s$ and $H_c$. If $M_s$ is chosen to equal 16 kilogauss and $H_c$ is chosen to be much greater than $M_s$, then the maximum energy product is 16 megagaussoersteds.

Hence, the teaching of the prior art for a perfectly oriented non-interacting material (anisotropic) is that the maximum energy product is four (4) times that of the same material when randomly oriented (isotropic).

For a general distribution of orientations of non-interacting particles, as a consequence of simple vector geometry,

$$(M_r/M_s) = [\cos(\theta)],$$

where theta is the angle between the applied field and the easy axis of a given particle, and the result represents the size weighted average over all of the particles. As is well understood in the art, $M_r/M_s = 1$ along the direction of orientation of a perfectly oriented, non-interacting, permanent magnet sample (anisotropic), and $M_r/M_s = 0.5$ in all directions for a completely unoriented, non-interacting sample (isotropic). See, e.g.. R.A. McCurrie, "Determination of the Easy Axis Alignment in Uniaxial Permanent Magnets for Remnance Measurements", J Appl. Phys.. Vol. 52, (No. 12), pages 7344-7346 (December 1981). Observations in the literature are consistent with this prediction. See, e.g., J.F. Herbst and J.C. Tracy, "On Estimating Remanent Magnetization from X-Ray Pole Figure Date", J. Appl. Phys., Vol. 50 (No. 6), pp. 4283-4284 (June 1979).

A figure of merit, which applicants refer to as the magnetic retention parameter, is

$$Q = \text{Sum}_{x,y,z}(M_r/M_s)^2,$$

where $M_s$ and $M_r$ are measured with the applied magnetic field along three orthogonal directions. Theoretically, for magnetic materials of the prior art. Q approaches 1 for perfectly oriented, non-interacting, particles or crystallites (anisotropic) and 0.75 for completely unoriented, non-interacting, crystallites (isotropic). The behavior for reported values of permanent magnetic materials of the prior art tend to produce values of Q which are substantially below the theoretical values. See, e.g., McCurrie; Herbst and Tracy; and Stoner and Wohlfarth; above.

One prior art system directed to obtaining improved magnetic parameters, is the samarium-cobalt alloy system (generally $SmCo_5$ or $Sm_2Co_{17}$). The samarium-cobalt system achieves improved magnetic parameters over ferrites, Alnico and other conventional permanent materials but utilizes more expensive materials and processes. The samarium-cobalt alloy system is rich in samarium, which is expensive to separate from the other, more abundant rare earth metals, and in cobalt, which is a strategic metal and possibly hard to obtain.

A second prior art alloy system is the rare earth - iron - boron system (RE-Fe-B). The exemplary magnetic properties of the RE-Fe-B system have been attributed to the compound $RE_2Fe_{14}B$. The existence of this compound was first reported by N.F. Chaban, Y.B. Kuzma, N.S. Bilonozhko, O.O. Kachmar, and N.V. Petrov, in Ternary (Nd, Sm, Gd) - Fe - B Systems , Dopv. Akad. Nauk. Ukr. RSR, Ser. A, No. 10, pages 873-875 (April 1979).

The structure and stochiometry of ingot and melt spun rare earth - iron - boron materials have been further elucidated by a group at the Physics Department of the General Motors Research Laboratory in Warren, Michigan (hereinafter referred to as GM). The materials are reported by J.F. Herbst, J.J. Croat, E.F. Pinkerton, and W.B. Yelon, Relationships Between Crystal Structure and Magnetic Properties In $Nd_2$-$Fe_{14}$-B , Phys. Rev. B, Vol. 29. No. 7, pp. 4176-4178 (April 1984), (GM I); and J.F. Herbst, J.J.Croat, and W.B. Yelon, Structural and Magnetic Properties of $Nd_2$-$Fe_{14}$-B , J. Appl. Phys., Vol. 57, No. 1, pp. 4086-4090 (April 1985), (GM II), GM I analyzed the stoichiometry and crystal structure of ingot material using Rietveld refined neutron powder diffraction data, as described hereinbelow, taken at 673 degrees Kelvin and at room temperature on a position sensitive detector-diffractometer. GM I reports the stoichiometry to be $RE_2Fe_{14}B$ and the space group to be $P4_2/mnm$. For the rare earth component being neodymium (Nd), the site designations, occupancies, positions, and lattice parameters are reported as shown in Table I below.

Table I

| Atom | Site | Occupancy | x | y | z |
|---|---|---|---|---|---|
| Nd | f | 4 | 0.266 | 0.266 | 0.0 |
| Nd | g | 4 | 0.139 | -0.139 | 0.0 |
| Fe | $k_1$ | 16 | 0.224 | 0.568 | 0.128 |
| Fe | $k_2$ | 16 | 0.039 | 0.359 | 0.176 |
| Fe | $j_1$ | 8 | 0.097 | 0.097 | 0.205 |
| Fe | $j_2$ | 8 | 0.318 | 0.318 | 0.247 |
| Fe | e | 8 | 0.5 | 0.5 | 0.113 |
| Fe | c | 8 | 0.0 | 0.5 | 0.0 |
| B | g | 8 | 0.368 | -0.368 | 0.0 |

| Lattice Parameters | |
|---|---|
| a | 0,880nm |
| c | 1,219nm |

In GM II, the atom positions and lattice parameters were redetermined based on measurements of what was stated to be a better ingot material than that of GM I. The positions and lattice parameters are shown in Table II, below. Further, GM II states that melt spun ribbons with the maximum energy product of 14.1 megagaussoersteds consist almost totally of the $Nd_2Fe_{14}B$ phase with some residual iron and no other identifiable second phase. The atomic position parameters of the melt spun material in GM II are identical to that of the ingot material within 0.003 of those shown in Table II. Table II

Table II

| Atom | Site | Occupancy | x | y | z |
|---|---|---|---|---|---|
| Nd | f | 4 | .2679(5) | 0.2679(5) | 0 |
| Nd | g | 4 | 0.1403 | -0.1403(4) | 0 |
| Fe | $k_1$ | 16 | 0.2234(3) | 0.5673(3) | 0.1274(2) |
| Fe | $k_2$ | 16 | 0.0375(3) | 0.3598(3) | 0.1758(2) |
| Fe | $j_1$ | 8 | 0.0979(3) | 0.0979(3) | 0.2045(2) |

Table II   (continued)

| Atom | Site | Occupancy | x | y | z |
|---|---|---|---|---|---|
| Fe | $j_2$ | 8 | 0.3167(3) | 0.3167(3) | 0.2464(3) |
| Fe | e | 4 | 0.5 | 0.5 | 0.1139(5) |
| Fe | c | 4 | 0 | 0.50 | 0 |
| B | g | 4 | 0.3711(9) | -0.3711(9) | 0 |

| Lattice Parameters | |
|---|---|
| a | 0,8803 mm |
| c | 1,2196 mm |

The prior art RE-TM-B system has been investigated in the form of both anisotropic and isotropic materials. Isotropic RE-TM-B magnetic materials have been prepared by the process of melt spinning. The isotropic materials include the GM materials referred to above, when formed from the melt spinning process.

In the melt spinning process. GM (Croat, et al, Japanese laid open Patent Application 60-9852 claiming the benefit of U.S. Patent Application Serial No. 508.266 filed June 24, 1983 for High Energy Product Rare Earth Iron Magnet Alloys , U.S. Patent Application Serial No. 544.728 filed October 26. 1983 for High Energy Product Rare Earth-Iron Magnet Alloys , and U.S. Application Serial No. 414,936, filed September 3, 1982 for High Energy Product Rare Earth Iron Magnet Alloys) claims to have identified specific quench parameter ranges, emphasizing wheel speed, necessary to obtain maxima of isotropic magnetic properties. GM reported that outside these relatively narrow ranges of quench parameters and wheel speeds, the melt spun materials have low coercivity, low remanance, and low maximum energy products significantly degraded from the peak reported values. The above peak reported values of the highest energy product rare earth - iron - boron alloys have been limited to an isotropic maximum magnetic energy product of about 112,24 $kJ/m^3$, a remanent of less than about 0.85 T and a coercivity on the order of 2.103 kA/m.

Additions, including silicon, have been utilized on occasion in the prior art, which additions have not improved the isotropic magnetic properties of melt spun materials. See, e.g., G.C. Hadjipanayis, E.C. Hazelton, and K.R. Lawless, New Iron-Rare Earth Based Permanent Magnetic Material , Appl. Phys. Lett., Vol. 43, No. 8, pp. 797-799, (October 1983); G.C. Hadjipanayis, R.C. Hazelton, and K.R. Lawless, Cobalt-Free Permanent Magnetic Materials Based on Iron-Rare Earth Alloys , J. Appl. Phys, 55 (6), pages 2073-2077 (March 1984); and H.H.Stadelmaier, N.A. Elmasry, and S. Cheng, Cobalt-Free and Samarium-Free Permanent Magnetic Materials Based on Iron-Rare Earth Boride , Materials Letters, Vol. 2, No. 2, pp. 169-172 (October 1983).

Another researcher, Joseph J. Becker, Rapidly Quenched Metals For Permanent Magnet Materials , J. Appl. Phys., Vol. 55, No. 6, pages 2067-2072 (March 1984) describes the magnetic properties of melt spun $Nd_{16}Fe_{76}$-$B_5$-$Si_3$ alloy. All of Becker's reported melt spun material is relatively poor as cast magnetic material, which is evidenced by the material's two phase hysteresis loop. Low coercivity RE-Fe-B-Si alloys are described in both the G.C. Hadjipanayis papers and in the H.H. Stadelmaier, et at papers referred to above. None of these papers describing rare earth - iron - boron alloys with silicon report maximum magnetic energy products greater than 95,5 $kJ/m^3$ (12 MGOe)

These prior art results are consistent with the above stated theoretical maximum energy product of 127,4 $kJ/m^3$ (16 MGOe), which is only obtained with a very large $H_c$. For a practical $H_c$ of about 1,6` $10^3$ kA/m theoretical maximum energy product is about 99,5 $kJ/m^3$. These theoretical and reported actual maximum energy products have led the prior art researchers to develop anisotropic materials to improve the magnetic properties.

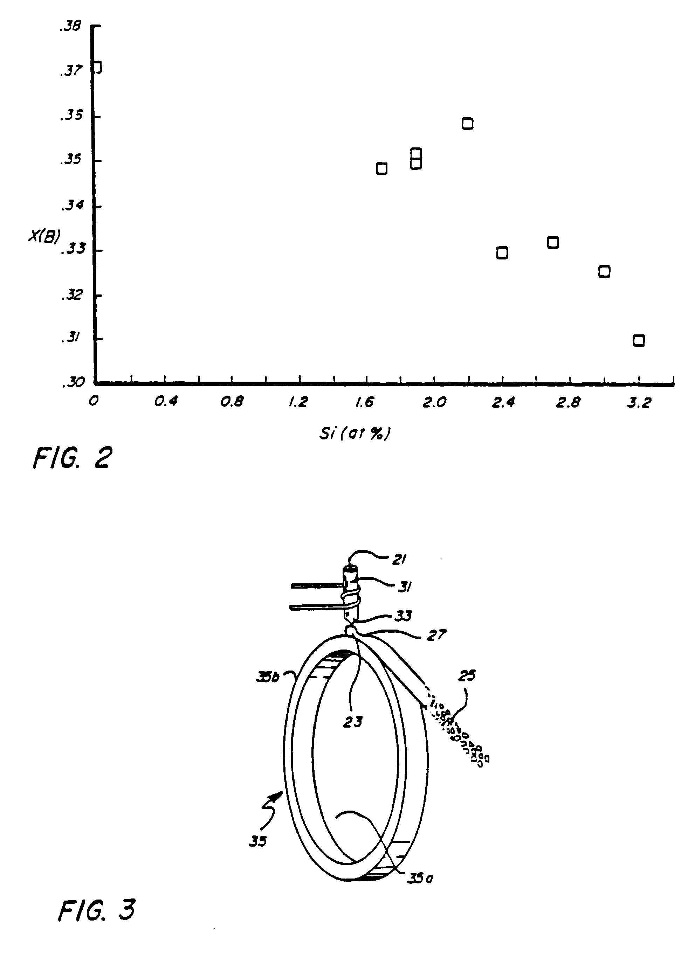

Anisotropic rare earth - iron - boron magnetic materials have heretofore been prepared by two different processes. One process is a melt spinning - hot press - die upset process (referred hereinafter as the die upset process). The die upset process is described in R.W. Lee, "Hot Pressed Neodymium-Iron-Boron Magnets", Appl. Phys. Lett., Vol. 46(8), pages 790-791 (April 1985), and European Patent Application 0-133-758 claiming the benefit of U.S. Application Serial No. 520,170, field August 4, 1983 by R.W. Lee for "Iron-Rare Earth-Boron Magnets by Hot Working". The Lee (GM) paper describes placing melt spun ribbon fragments into a high temperature die and, applying uniaxial pressure to achieve densification. The coercivity was approximately 19.5 kilooersteds in all directions of measurement. The densified material is then "die upset", i.e., hot pressed in a second, larger diameter die press. The Lee paper reports that the second hot press, i.e., the "die upset", introduces crystallographic orientation. Energy products of as high as 318 $kJ/m^3$ (40 MGOe) were reported after die upsetting. The coercivity was reduced to 995 kA/m (12,5 kOe) measured parallel to crystallographic orientation and 1234 kA/m (15,5 kOe), measured perpendicular to crystallographic orientation. Based on Figure 2 of the Lee paper and using 1,5 T (15 kG) saturation magnetization, applicants have calculated the Q factor for the densified material as 0.79. Based on Figure 3 of the Lee paper and using 1,5 T saturation magnetization, the Q factor for the die upset material was calculated by applicants as 0.71.

The second process is a consolidate - cast - crush - grind - magnetic alignement - hot press - sinter process which has been described in European Laid Open Patent Application 0-101-552-12 (Application No.83-106573.5) of Masato Sagawa, Setsuo Fujimura, and Yutoka Matsuura for <u>Magnetic Materials and Permanent Magnets</u> , claiming the benefit of Japanese Patent Applications (i) 145072/82 filed August 21, 1982, (ii) 200204/82 filed November 15, 1982, (iii) 5814/83 filed January 19, 1983, (iv) 37896/83 filed March 8, 1983, (v) 37898/83 filed March 9, 1983, (vi) 84859/83 filed May 14, 1983, and (vii) 94876/83 filed May 31, 1983, and in M. Sagawa, S. Fujimura, N. Togawa, H. Yamamoto, and Y. Matsuura, <u>New Material For Permanent Magnets On A Base of Nd and Fe</u>, J. Appl. Phys. Vol. 55(6), pages 2083-2087 (March 1984). These applications and publications are attributed to Sumitomo Special Metals Company Ltd. of Osaka, Japan, hereinafter referred to as Sumitomo. The Sumitomo process is a multi-step process, requiring:

(i) consolidating the alloy, e.g., by (a) high frequency induction melting, and (b) casting, e.g., in a water cooled copper mold into an ingot;
(ii) pulverization of the ingot into a fine mesh powder, which is disclosed as a two step process, e.g., (a) a coarse grinding to minus 35 mesh, and (b) a fine grinding to 3 to 10 µm
(iii) magnetic alignment of the alloy powder, e.g., in a 10 kilooersted field;
(iv) pressing the aligned powder, e.g., under a pressure of 1.5 t/cm$^2$ and under the influence of an applied magnetic field; and
(v) sintering the pressed powder, e.g. at 1000 to 1200°C for about one hour, in an argon atmosphere, into a compacted body.

This multi-step process starts with a soft magnetic alloy, and, only after crushing, grinding, magnetic aligning, pressing, and sintering, yields a sintered magnetic anisotropic material body having a magnetic energy product of as high as 290 kJ/m$^3$ (36,5 MGOe), a coercive force of about 716 kA/m(gkoe), and a remanant of about 1,26 T. A similarly prepared, commercially available material from Crucible Magnetic Division of Colt Industries of Pittsburgh, PA., was tested by applicants and found to have a Q of 0.53 (assuming a $M_s$ of 1,5 T), a maximum magnetic energy product of 217 kJ/m$^3$ in the direction of magnetic alignment, a coercive force of 1322 kA/m, and a remanent of 1 T.

Sumitomo also has reported an isotropic material which utilizes the above process without utilizing the magnetic alignment step (iii). This material had poor magnetic properties as set forth in Table III.

Sumitomo attempted to raise the Curie Temperature of their sintered material by the addition of silicon, as set forth in Japanese Laid Open Doc Number 60-009104, laid open on January 18, 1985 and based on Japanese Application No 83-117439, filed on June 29, 1983, and Japanese Laid Open Doc Number 60-001808, laid open on January 8, 1985, and based on Japanese Application No. 83-110016, filed on June 17, 1983. The applicants disclose that, in the relevant RE-Fe-B-Si composition range, the Curie temperature is increased by the addition of silicon. However, the observed increase in Curie temperature is disclosed as being obtained at the cost of a reduction in the magnetic energy product from the maximum of 36.5 megagussoersteds reported above.

In Summary, Applicants have selected prior art isotropic and anisotropic materials which are representative of the best magnetic properties found in the published prior art. The prior art isotropic materials are described in Table III (An $M_s$ of 1,6 T was used.).

The prior art anisotropic materials are described in Table IV. (An $M_s$ of 1.6 T was used.)

## TABLE IV

| SOURCE | RESULTS FROM | PROCESS | GRAIN SIZE (micron) | COMPOSITION | First Axis * REMANENCE (kG) | First Axis * COERCIVITY (kOe) | First Axis * MAXIMUM ENERGY PRODUCT (MGOe) | Second Axis ** REMANENCE (kG) | Second Axis ** COERCIVITY (kOe) | Second Axis ** MAXIMUM ENERGY PRODUCT (MGOe) | Q (Theoretical) | Q*** (Calculated) |
|---|---|---|---|---|---|---|---|---|---|---|---|---|
| GM (NO3) | Lee 1985 | Melt Spin & Die Upset | 0,1-0,5 | $Nd_{1.2}Fe_{82.6}N_{4.4}$ | (30,7) 1,07 | (12,4) 0,99 | (27) 215 | (6,1) 0,47 | (15,4) 1,23 | (6,3) 34,2 | ≤ 1 | 0,62 |
| SUMITOMO (NEOMAX-35) | Li & Strnat 1985 | Grind & Align & Sinter | 5-15 | $Nd_{15}Fe_{77}B_8$ | (12,2) 1,22 | (15,1) 1,23 | (34.8) 277 | (1) 0.1 | (3) 0.24 | (0,2) 1,6 | ≤ 1 | 0,59 |
| HITACHI | Tokunaga 1985 | Grind & Align & Sinter | 3,5 | $Pr_{16.7}Fe_{75.9}B_{1.3}$ | (9,7) 0,97 | (17) 1,39 | (21) 167 | **** | **** | **** | ≤ 1 | 0,4 |
| COLT IND. (CRUMAX) | *** | Grind & Align & Sinter | 7 | Nd Fe B | (11) 1,1 | (17) 1,39 | (27) 215 | (0,7) 0,07 | (4) 0,12 | (4,1) 0,8 | ≤ 1 | 0,48 |
| | | | μm | | T / .10³ kA/m | | kJ/m³ | T / .10³ kA/m | | kJ/m³ | | |

* Magnetic measurement parallel to orientation direction
** Magnetic measurement perpendicular to first axis
*** Calculated by Applicants
**** Not published (assumed as 1 for Q calculation)

EP 0 195 219 B2

6

TABLE III

| SOURCE | RESULTS FROM[*] | PROCESS | GRAIN SIZE (microns) | COMPOSITION | First Axis[**] | | | Second Axis[***] | | | σ (Theoretical) | σ[****] (Calculated) |
| | | | | | REMANENCE (kG) | COERCIVITY (kOe) | MAXIMUM ENERGY PRODUCT (MGOe) | REMANENCE (kG) | COERCIVITY (kOe) | MAXIMUM ENERGY PRODUCT (MGOe) | | |
|---|---|---|---|---|---|---|---|---|---|---|---|---|
| KOLLMORGEN | Hadjipanayis 1983 (p.11) | Melt Spun & Anneal | 0,01 | $Pr_{16}Fe_{76}B_5Si_3$ | (7,0) 0,7 | (14) 1,11 | (12) 95,5 | (7.0) 0,7 | (14) 1,11 | (12) 95,5 | 0,75 | 0,57 |
| GM (MO1) | Japan Pat. Appln. 60-9852 (p.10) | Melt Spun | 0,01-0,08 | $Nd_{13}Fe_{82.6}B_{4.4}$ | (8,2) 0,8 | (15) 1,19 | (14.1) 112,2 | (8.2) 0,8 | (15) 1,19 | (14,1) 112,1 | 0,75 | 0,80 |
| SUMITOMO | Euro. Pat. Appln. 83-106573.5 (p.13) | Grind & Sinter (No Magnetic Alignment) | 5,0-10,0 | $Nd_{15}Fe_{77}B_8$ | (6,4) 0,6 | (8,5) 0,67 | (8,7) 69,3 | (6.4) 0,6 | (8,5) 0,67 | (8,7) 69,3 | 0,75 | 0,48 |
| | | | μm | | T | $.10^3$ kA/m | $kJ/m^3$ | T | $.10^3$ kA/m | $kJ/m^3$ | | |

* Page numbers refer to instant specification
** Magnetic measurement in an arbitrary direction
*** Magnetic measurement perpendicular to first axis (presumed to be the same, generally not published)
**** Calculated by Applicants

It is observed from the foregoing that improvement in one property of these materials, for example, the Curie temperature, is obtained at the expense of another property, the maximum energy product. It was discovered by Stanford R. Ovshinsky that, depending on the method of incorporating certain materials into an alloy base, certain selected properties of the alloyed materials can be substantially modified in a desired way without adversely affecting other properties seemingly dependent on the modified properties. This principle is now known as modification and is described in various publications such as, for example, in U.S. Patent Nos. 4,177,473, 4,177,474, 4,178,415, 4,520,039, 4,447,277 and 4,431,561. The materials disclosed in these patents are formed in a solid amorphous host matrix having structural configurations which have local rather than long-range order. According to the principle, a modification material is added to the host matrix, which material has orbitals which interact with the host matrix as well as with themselves. This interaction substantially modifies the electronic configurations of the host matrix. These materials have on an atomic or microscopic level atomic configurations substantially changed to provide, e.g., independently increased electrical conductivity.

Modification has been effected in a number of ways, e.g., diffusion in, co-depositing, excited gas modification, double nozzle melt spinning, compositional modification, layering, or incorporation in the melt. U.S. Patent No. 4,339.255 and "Chemistry and Structure of in Amorphous Materials: The Shape of Things to Come" by S.R. Ovshinsky, <u>Physics</u> <u>of</u> <u>Disordered</u> <u>Materials</u>, (David Adler, Helmut Fritzsche and Stanford R. Ovshinsky, eds., (Plenum Publishing Corp., 1985) describe a number of these processes. These processes include both chemical and structural modification, both types of modifications resulting in properties characteristic of non-equilibrium materials with modified local orders, structures and configurations.

As summarized in Table III, the prior art isotropic materials have fairly low magnetic properties. The prior art teaches that anisotropic materials are necessary for any significant improvement of magnetic parameters. The prior art methods form the anisotropic materials by utilizing further expensive and time consuming processes, which materials are summarized in Table IV.

It is an object of the present invention to obtain a magnetically substantially isotropic material comprising a higher maximum magnetic energy product.

The invention is characterized in claim 1 and prefered embodiments are claimed in subclaims

The herein contemplated permanent magnetic materials have a magnetic retention parameter, Q, as described above, greater than 1. The theoretical limit of the magnetic retention parameter, Q, for the herein contemplated materials is believed to be 3, rather than the theoretical values of 1.0 and 0.75 for aligned (anisotropic) and unaligned (isotropic), non-interacting materials of the prior art.

Ribbon samples of the as quenched material, can, without further processing, exhibit remanant magnetization, $M_r$, greater than 0.9 T (9kG), coercive force, $H_c$, greater than 637 kA/m (8kOe) and preferably greater than 676 kA/m, and maximum energy product (BH)max greater than 119,4 kJ/m$^3$ (15MGOe) with similar values measured in all directions, i.e., In the plane of the ribbon and perpendicular to the plane of the ribbon. In the latter case the value was obtained after a standard correction (demagnetization factor) for the shape anisotropy of the ribbon.

The saturation magnetization $M_s$ of the ribbon, i.e., the magnetization in the limit or large applied fields, is estimated to be 1,5 - 1.55 T, also in all directions. The values correspond to the value of $M_r/M_s$ greater than 0.6, and a magnetic retention parameter, Q, greater than 1, in contradistinction to the clear teachings of the prior art for a macroscopically isotropic, non-interacting material.

Typical magnetic parameters for the magnetic alloys of the invention are as shown in Table V below.

A hard magnetic alloy of the RE-TM-B-type is known (Journal of Applied Physics, 1984, pages 2073 - 2077). The maximum magnetic energy product of this cobalt-free permanent magnet material is about 103,5 kJ/m$^3$. This material is relatively anisotropic and the best results are obtained if fine precipitates in the range of 100 nm are dispersed in a matrix of different chemical composition. Furthermore, a hard magnetic alloy according to the opening part of claim 1 is described in J. Appl. Phys. 57(1) April 1985, pages 4086-4090. The optimal maximum energy product in ribbons melt spun of this alloy is 14.1 MGOe.

## TABLE V

| SOURCE | RESULTS FROM | PROCESS | GRAIN SIZE (microns) | COMPOSITION | First Axis * | | | Second Axis ** | | | Q (Theoretical) | Q*** (Calculated) |
|---|---|---|---|---|---|---|---|---|---|---|---|---|
| | | | | | REMANENCE (kG) | COERCIVITY (kOe) | MAXIMUM ENERGY PRODUCT (MJm) | REMANENCE (kG) | COERCIVITY (kOe) | MAXIMUM ENERGY PRODUCT (MJm) | | |
| ECD (469AA12-1) | Applicants | Melt Spun | <0,2 | $Nd_{14.8}Fe_{76.6}B_{12.6}$ | (12,2) 1,2 | (>22) >1,75 | (31,6) 251 | (10) 1 | (>22) >1,75 | (21,4) 170 | 0,75 | 1,4 |
| ECD (376AVN6-8) | Applicants | Melt Spun | <0,2 | $Nd_{12.7}Fe_{79.6}B_{11.7}$ | (12,4) 1,2 | (8,5) 0,68 | (24,2) 192 | (11,3) 1,1 | (8,3) 0,66 | (22,1) 176 | 0,75 | 1,7 |
| ECD (471ACD1-1) | Applicants | Melt Spun | <0,2 | $Nd_{13.1}Fe_{79.6}B_{11.3}$ | (10,4) 1,0 | (12,2) 0,97 | (22,7) 180 | (9,9) 0,99 | (12,2) 0,97 | (20,8) 165 | 0,75 | 1,2 |
| ECD (400AA10-7) | Applicants | Melt Spun | <0,2 | $Nd_{11}Pr_{3}Fe_{78}B_{12}$ | (10,2) 1,0 | (11,6) 0,92 | (20,8) 165 | (10,1) 1 | (11,6) 0,92 | (20,2) 161 | 0,75 | 1,2 |
| ECD (393AG01-83) | Applicants | Melt Spun | <0,2 | $Nd_{11}Fe_{79}B_{4}Al_{2.4}B_{11.6}$ | (9,6) 0,96 | (9,8) 0,78 | (17,7) 140 | (9,3) 0,93 | (9,5) 0,76 | (15,9) 127 | 0,75 | 1,05 |
| ECD (376A009-2, 650°6Hr) | Applicants | Melt Spun & Anneal | <0,2 | $Nd_{12.5}Fe_{78.2}B_{11.3}$ | (9,6) 0,96 | (13,6) 1,08 | (18,6) 148 | (8,8) 0,88 | (14,2) 1,13 | (15,8) 126 | 0,75 | 1,03 |
| | | | μm | | T | $.10^3$ kA/m | $kJ/m^3$ | T | $.10^3$ kA/m | $kJ/m^3$ | | |

\* Magnetic measurement in an arbitrary direction
\*\* Magnetic measurement perpendicular to first axis
\*\*\* Calculated by Applicants

In one embodiment of the invention, the as spun ribbon material may be further processed to produce compacted magnetic bodies. It is possible that some amount of magnetic anisotropy may be created in the material as an effect of the processing steps used.

As can be seen from Table V, the samples of the materials of the present invention made by the herein disclosed method exhibit superior relevant magnetic parameters when compared with the isotropic materials of the prior art listed in Table III. When compared with the anisotropic prior art materials listed in Table IV, the samples of the present invention exhibit comparable magnetic properties, and were prepared without the costly, complicated alignment steps necessary in the prior art.

THE FIGURES

The invention may be understood by reference to the following figures.

FIGURES 1A and 1B are Rietveld refined powder x-ray diffraction patterns for powders from a melt spun ribbon (376AV08) of $Fe_{79.6}Nd_{12.7}B_6Si_{1.7}$, (Example VII) where FIGURE 1A shows the error pattern without refinement for alpha iron, and FIGURE 2B shows the error pattern after refinement for alpha iron.

FIGURE 2 is a graphical representation of boron displacement versus silicon content as determined by Rietveld refined x-ray diffraction.

FIGURE 3 is a perspective view of quenching apparatus having a molten material reservoir, an outlet, a rotating chill surface, a puddle of molten alloy material, and a solid ribbon extending therefrom.

FIGURE 4 is a representation of the puddle, ribbon, and chill surface means of FIGURE 5 where the motion of the solidification front is shown.

FIGURE 5 is a perspective view of randomly stacked magnetic particles.

FIGURE 6 is a plot of maximum magnetic energy product versus chill wheel velocity for the material of Example I (400 Series).

FIGURE 7 is a plot remanence versus chill wheel velocity for the material of Example I (400 Series).

FIGURE 8 is a plot of coercive force versus chill surface velocity for the materials of Example I (400 Series).

FIGURES 9 and 10 are hysteresis loops for materials of Example I (Ribbon Examples 400AA10(1) and 400AA10 (5)).

FIGURES 11, 12 and 13, are hysteresis loops in three directions for a sample of material of Example II. (400AA10 (7)).

FIGURE 14 is the hysteresis loop of Fig. 13, corrected for demagnetization.

FIGURES 15A and 15B are Rietveld refined x-ray difraction patterns for ribbon material of Example II (400AA10(7).

FIGURE 16 is a representation of maximum magnetic energy product versus wheel speed for material of Example III (438 Series).

FIGURE 17 is a representation of mean remanence versus wheel speed for material of Example III (438 Series).

FIGURE 18 is a representation of mean coercivity versus wheel speed for material of Example III (438 Series).

FIGURES 19 through 23 inclusive are representations of the hysteresis loops for samples of materials of Example III for increasing wheel speeds (438 Series).

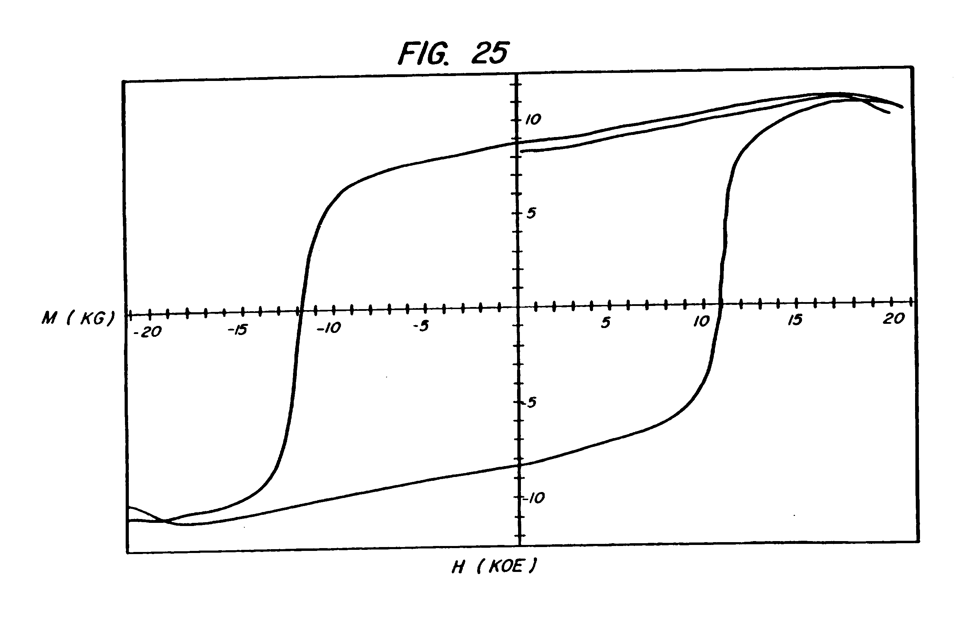

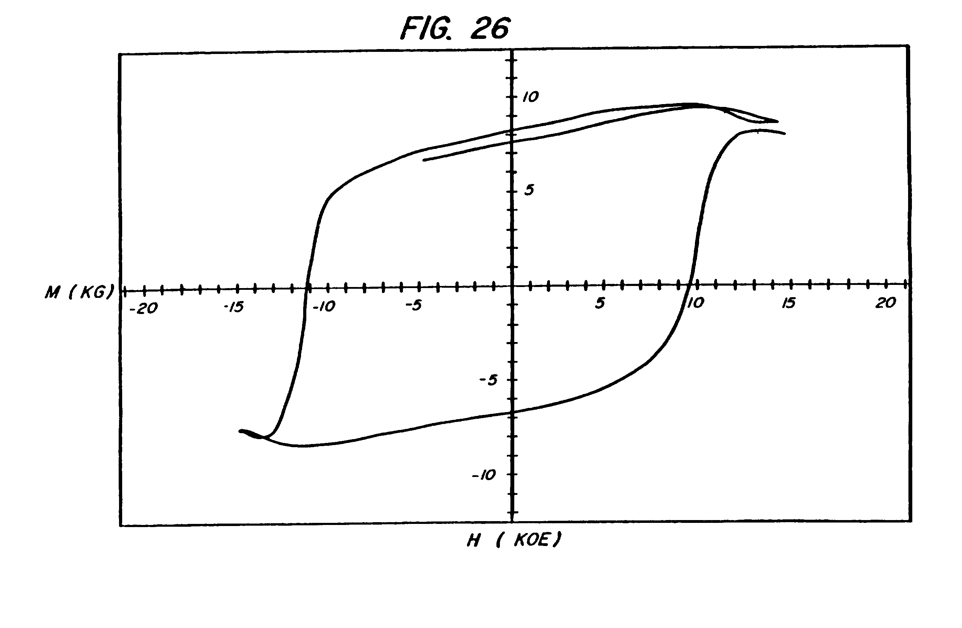

FIGURES 24 through 26 inclusive are representations of the hysteresis loop in three directions for a sample of the material of Example IV (438AA05(1)).

FIGURES 27A and 27B are Rietveld refined x-ray diffraction patterns for the material of Example V (411AB02).

FIGURES 28A and 28B are Rietveld refined x-ray diffraction patterns for the materials of Example VI (435AA06).

FIGURE 29 is a plot of maximum magnetic energy product versus wheel speed for samples of materials of Example IX (471 Series).

FIGURES 30 through 33 are scanning electron micrographs of samples of materials of Example IX (471AC01(3)), 477AA01(5), 47AA01(4) and 477AA01(3) respectively).

FIGURES 34 through 37 are hysteresis loops for materials of Example IX (471AC01(3), 477AA01(5), 471AA01 (4), and 477AA01(3) respectively) corresponding to SEM photos shown in Figures 30 through 33.

FIGURES 38 through 45 are from a twin of sample 477A001(1) of Example IX. FIGURE 38 is a transmission electron micrograph of a fine grain region on the wheel side of ribbon.

FIGURE 39 is a single area electron diffraction from the fine grain region of Fig. 38.

FIGURE 40 is a elemental analysis by energy dispersive spectrum from the fine grain region of Fig. 38.

FIGURE 41 is a transmissive electron micrograph of an area containing intergranular precipitates rich in Neodymium and Sulfur.

FIGURE 42 is an elemental analysis by energy dispersive spectrum from the intergranular area of Fig. 44.

FIGURE 43 is a transmission electron micrograph of a large grain region on the free side of the ribbon.

FIGURE 44 is a single area electron diffraction from the large grain region of Fig. 43.

FIGURE 45 is an elemental analysis by energy dispersive spectrum from the large grain region of Fig. 43.

FIGURE 46 is a M-H curve for the material of example XI (Sample 469 AA12 (1)), and corresponds to Fig.8 of U. S. Appl. Ser. No. 801 996.

DETAILED DESCRIPTION OF THE INVENTION

According to the invention there is provided a magnetic alloy material having superior magnetic properties, methods of synthesizing the magnetic alloy material, compacted bodies of the magnetic alloy material, and methods of forming the compacted bodies of the magnetic alloy material.

The alloy is a substantially crystallographically unoriented, magnetically isotropic alloy. It is a permanent hard magnet, preferably with an isotropic maximum magnetic energy greater than 119,5 kJ/m$^3$ (15 MGOe), and a magnetic retention parameter, Q, greater than 1.0

The magnetic alloy material has a maximum magnetic energy product, $(BxH)_{max}$, of at least about 119,5 kJ/m$^2$, a coercivity of above about 637 kA/m, and a remanence of above about 0,9 T, and preferably above about 1,1 T (11 kG).

Ribbon samples of the as quenched material can, without further processing, exhibit remanent magnetization, $M_r$, greater than 0,9 T, coercive force, $H_c$, greater than 637 kA/m, and maximum energy product, $(BH)_{max}$, greater than 119,5 kJ/m$^3$ with similar values measured in all directions, i.e., in the plane of the ribbon and perpendicular to the plane of the ribbon. In the latter case the value was after a standard correction (demagnetization factor) for the shape anisotropy of the ribbon.

The saturation magnetization $M_s$ of the ribbon, i.e., the magnetization in the limit of large applied fields, is estimated to be 119,5 - 123.4 kJ/m$^3$, also in all directions. These values correspond to a value of $M_r/M_s$ greater than 0.6, and a magnetic retention parameter, Q, greater than 1, in contradistinction to the clear teachings of the prior art for a macroscopically isotropic material.

In one exemplification the magnetic alloy material is an alloy of iron, optionally with other transition metals, as cobalt, a rare earth metal or metals, boron, and a modifier.

A modifier is an alloying element or elements added to a magnetic material which serve to improve the isotropic magnetic properties of the resultant material, when combined with the unmodified material by an appropriate processing technique. Exemplary modifiers are silicon, aluminum, and mixtures thereof. Alternative or additional modifiers may include lithium, hydrogen, fluorine, phosphorous, sulfur, germanium, and carbon.

The amount of modifier is at a level, in combination with the quench parameters, to give the above described isotropic magnetic parameters and the below described x-ray pattern.

The magnetic alloy may be of the type
[Rare Earth Metal(s)]-[Transition Metal(s)]-Boron-[modifier(s)],
for example
[Rare Earth Metal(s)]-[Fe,Co]-Boron-[modifier(s)].

In a preferred exemplification, the magnetic alloy material has the stoichiometry represented by:

$$Fe_a(Nd,Pr)_b B_c(Al, Si)_d,$$

where a, b, c, and d represent the atomic percentages of the components iron, rare earth metal or metals, boron, and silicon, respectively, in the alloy, as determined by energy dispersive spectroscopy (EDS) and wave length dispersive spectroscopy (WDS) in a scanning electron microscope;

$$a + b + c + d = 100;$$

a is from 75 to 80;
b is from 10 to 14, and especially from 11 to 13.5;
c is from 5 to 10;
and d is from 0.5 to 5.0.

The rare earth metal is a lanthanide chosen from neodymium and praseodymium, optionally with other lanthanides (one or more La, Ce, Sm, Eu, Gd, Tb, Dy, Ho, Er, Tm, Yb and Lu), Sc, Y, and mixtures thereof present. While various combinations of the rare earth metals may be used without departing from the concept of this invention, especially preferred rare earth metals are those that exhibit one or more of the following characteristics : (1) the number of f-shell electrons is neither 0 (as La), 7 (as Gd) or 14 (as Lu), (2) low molecular weight lanthanides, such as La, Ce, Pr, Nd, and Sm, (3) high magnetic moment lanthanides that couple ferromagnetically with iron, as Nd and Pr, or (4) relatively inexpensive lanthanides, as La, Ce, Pr, and Nd. Especially preferred are Nd and Pr. Various commercial and/or byproduct mischmetals may be used. Especially preferred mischmetals are those rich in Nd and/or Pr.

It is believed that silicon, aluminum, or silicon and aluminum may modify the thermodynamic pathway to solidification, resulting in a modified material and may promote the formation of intergranular phases and/or particle-particle interactions that enhance the magnetic properties of the rapidly quenched magnetic alloy material.

In high remanence materials, the majority of the material is fine grained such that the metallographic grains are not resolvable by polishing and etching, e.g., in 1 to 2 percent nitric acid in ethanol, and are not observable by scanning electron microscopy, having a resolution of 2000 Angstroms.

The alloy has a crystallographic structure having a Rietveld refined x-ray powder diffraction pattern consistent with (1) the presence of a major portion of a tetragonal rare earth - iron - boron type phase, modified in atomic occupancy and lattice parameters from the prior art rare earth iron - boron type material by the presence of a modifier, as Si and/or Al, and (2) an alpha - iron phase, optionally with other phases being present below the level of detection by x-ray diffraction.

While the structural differences between the magnetic materials of the invention and the materials of GM, above, are subtle, they are believed to be critical for the substantially superior magnetic parameters when combined with the proper microstructure, and are consistent with a high sensitivity to process parameters of final magnetic parameters.

The hard magnetic alloy material has a crystallographic structure exhibiting a Rietveld refined x-ray powder diffraction pattern consistent with the presence of a major portion of a tetragonal phase with the structure $P4_2/mnm$, and composed of RE-Fe-B, RE-Fe-B-Si, RE-Fe-B-(Si,Al), or RE-Fe-B-Al, of a body centered cubic alpha-iron phase, and possibly other exsolved phases below the level of detection of x-ray diffraction. Additionally, the Rietveld refined x-ray powder diffraction pattern is consistent with a shift in the boron position relative to that in the unmodified material, such shift increasing with increasing Si content at the Si concentrations of interest.

These observations are not inconsistent with the modifier, e.g., Si, substituting for Fe in the tetragonal RE-Fe-B lattice.

Rietveld analysis is described by R.A. Young and D.B. Wiles in Application of the Rietveld Method for Structure Refinement with Powder Diffraction Data, Adv , in X-Ray Anal., Vol. 24, pp. 1-24 (1981; and in Profile Shape Functions in Rietveld Refinements , J. Appl. Cryst., Vol. 15, pp. 430-438 (1982).). Rietveld analysis starts with powder diffraction data, e.g., x-ray diffraction data or neutron diffraction data, and produces refined values of the structural parameters therefrom. Rietveld analysis uses least squares methodology to obtain a best fit between the entire calculated powder diffraction patterns as a whole. In this way, it is possible to obtain such structural parameters as atomic co-ordinates, thermal motion, and site occupancy parameters.

As described by Young and Wiles, above, no initial attempt is made to allocate intensities observed in the powder diffraction pattern to particular Bragg reflections, nor to resolve overlapped reflections. Instead, the expected powder diffraction pattern versus degrees two theta is calculated from models of the crystal structure. Next, the difference between the observed and calculated powder diffractions is used to calculate parameter shifts that improve the fit. This is continued, using every bit of observed intensity information.

One typical magnetic alloy material of the invention has the occupancies, crystal lattice parameters, and scale factor, based on Rietveld refinement of x-ray diffraction data, as shown on Table VI:

Table VI

| Rietveld Refined Parameters of High As Quenched Energy Product Nd-Fe-B-Si Alloy (12.7 At % Nd, 79.6 At % Fe, 6 At % B, 1.7 At % Si) 376AV08 | | | | |
|---|---|---|---|---|
| Atom | x | y | z | n |
| Nd(1) | 0.2736(8) | 0.2736(8) | 0.0000 | 0.24(1) |
| Nd(2) | 0.1417(8) | 0.1417(8) | 0.0000 | 0.23(1) |
| Fe(1) | 0.2220(3) | 0.5653(13) | 0.5653(13) | 1.05(4) |
| Fe(2) | 0.0380(11) | 0.3577(12) | 0.1762(9) | 1.11(4) |
| Fe(3) | 0.1063(14) | 0.1063(14) | 0.273(12) | 0.50(2) |
| Fe(4) | 0.3141(10) | 0.3141(10) | 0.2603(13) | 0.55(2) |
| Fe(5) | 0.5000 | 0.5000 | 0.1150(24) | 0.23(1) |
| Fe(6) | 0.0000 | 0.5000 | 0.0000 | 0.2500 |
| B(1) | 0.339(13) | -0.339(13) | 0.0000 | 0.28(8) |

| | |
|---|---|
| c axis (nm) | 1,2203(3)-1,2221(3) |
| a axis (nm) | 0,8796(1)÷0,8801(2) |

Scale factor (rare earth - iron - boron phase to alpha iron) 74.29/1

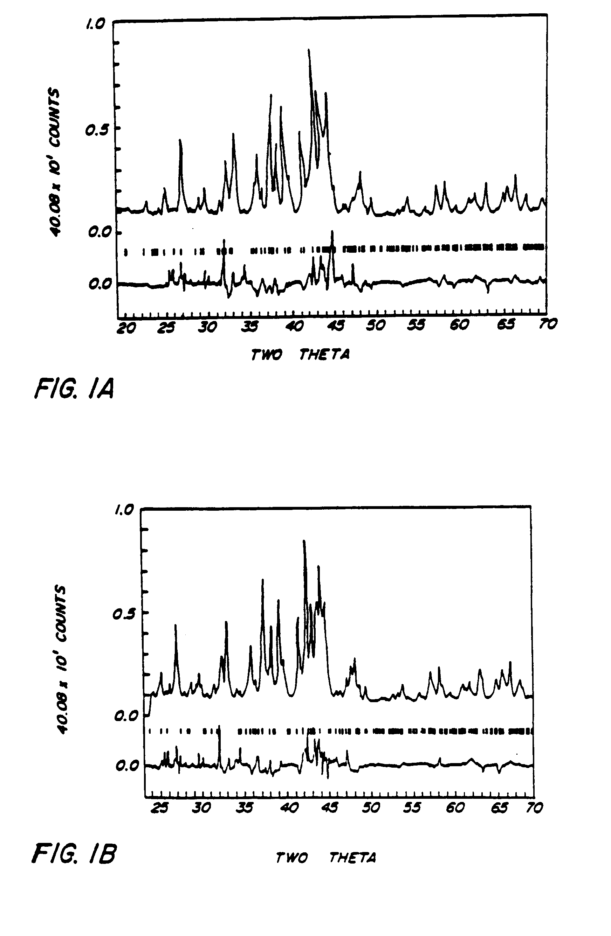

The magnetic alloy materials of the invention have the Rietveld refined x-ray diffraction pattern shown in FIGURES 1A and 1B.

FIGURES 1A and 1B are Rietveld refined powder x-ray diffraction patterns for powdered magnetic ribbon sample number 376AV08 (see example No. 7 for composition and other details).

Rietveld refined x-ray diffraction results on ribbon material indicated the material was substantially isotropic.

FIGURE 2 is a plot of the boron lattice position versus silicon content. Additions of silicon are seen to correlate with the progressive shift of the boron lattice position within the tetragonal rare earth - iron - boron lattice, with respect to the Rietveld refined neutron diffraction data of GM II for the silicon-free rare earth - iron - boron tetragonal material. This is outside the range of experimental error, and is consistent with a non-interstitial location of silicon in the lattice.

One means of producing the above described, magnetic alloy having magnetic isotropy and the above crystallographic properties is by melt spinning, i.e., rapidly solidifying and quenching molten alloy material onto a moving chill surface, e.g., a rotating chill surface means substantially as shown in FIGURE 3. Molten alloy material 21 contained in a crucible 31 is dischaged through an orifice 33 onto a chill surface means 35. The chill surface means 35, e.g., a wheel 35A with a diameter of from about (10 inches) 25 cm to about (60 inches) 1,5 m or more, having a thermally conductive surface 35B thereon, moves with respect to the orifice 33, e.g., rotating at a linear velocity of about 17 to 35 m/s. second. Optimum wheel speeds are dependent on other process control parameters, specifically those affecting mass flow rate.

In this process, the molten material 21 forms a molten puddle 23 on the thermally conductive surface 35B of the chill surface means 35. A ribbon, wire, or filament 25 forms at the interface of the puddle 23 with the thermally conductive surface 35B as heat is conducted out of the solidifying material into and through the conductive surface 35B of the chill surface means 35. This results in the formation of a solidification front 27 at the interface between molten material, e. g., the puddle 23, and solid material, e.g., the ribbon 25. The velocity of the solidification front and the direction of the solidification front 27 with respect to the chill surface 35B determine the magnetic properties of the material. The orientation and velocity of the solidification front 27 and the thermal gradient across the front as well as grain coarseness are believed to be functions of the quench parameters, and interactions therebetween i.e.,

(1) the chill surface means 35 velocity,
(2) the chill wheel diameter
(3) the coefficients of thermal conductivity, k, of (a) the molten material 23, (b) the solid material 25 and (c) the chill surface 35B,
(4) the heat transfer coefficients, h, (a) across the solidification front 27 and (b) across the ribbon 25 - chill surface 35B interface,
(5) the characteristic dimension of the orifice 33 and concommitant thickness of the puddle 23,
(6) the specific heats, $C_p$, of (a) the molten material 23 and (b) the solid material 25, and
(7) the heat of fusion $H_f$, and melting temperature, $T_m$, of the molten material 23;
(8) the quench duration; and
(9) the effect of the modifier elements.

In order to obtain a homogeneous quenched alloy of the invention, it is essential to have a substantially homogeneous melt. In one embodiment this is insured by first reacting the constituent elements to form a macroscopically homogeneous mother alloy. It is believed that the presence of silicon and or other modifier in the melt promotes the high homogeneity observed.

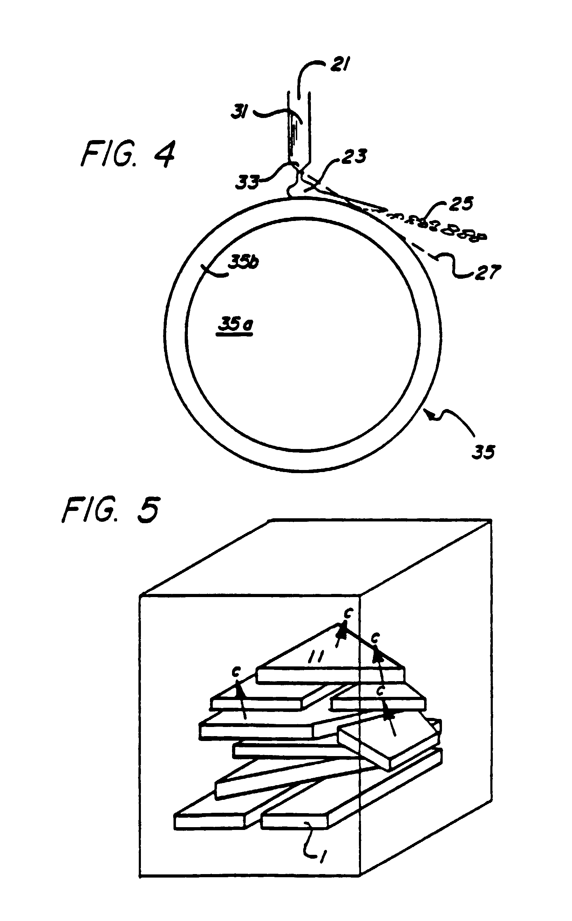

The quench parameters may be controlled to direct the solidification front 27, control its velocity, and control grain coarseness. FIGURE 4 is a representation of the puddle 23, the ribbon 25, and the solidification front 27 where the quench parameters are controlled to provide desired velocity of the solidification front 27, and rates of grain growth.

The alloy is quenched at an appropriate rate to result in electronic, atomic, crystallographic and morphological structures and configurations that give rise to the novel magnetic properties. The quench parameters are carefully controlled to produce an appropriate fine grained structure, which, together with the aforementioned modifier, results in the desired permanent magnet material.

Alternatively, the alloy may be quenched at a rate sufficient to produce a precursor microstructure, which, when appropriately heat treated, results in a structure exhibiting the above described improved magnetic parameters

Individual melt spun fragments are recovered as product from the melt spinning process. Individual particles can also be obtained by the comminution of the ribbon fragments which are generally relatively brittle. The ribbon fractures, yielding particles, e.g., flake like particles, or plate like individual particles 11 shown in Figure 5. The individual particles, when shaken or agitated, stack with their major surfaces 13 arrayed substantially parallel.

A practical advantage of the particulate magnetic material is the ease of subsequent formation and fabrication into an end-use product. Since the magnetic particles of the present invention are isotropic in their magnetic behavior, they can be pressed and compacted without regard for any particular crystalline orientation and/or magnetic alignment. Thus, according to one embodiment of the invention, ribbon material can be further reduced in size to, e.g., 0.5 mm in the largest dimension, cold pressed, and bonded. In this way, magnetic powder densities above about 70 percent may be obtained, with $(BH)_{max}$ values greater than 50 percent of the original, fully dense starting material.

According to the invention, the magnetic materials of the invention can be pressed to above about 90 percent of theoretical density, without a magnetic alignment step, while still retaining the enhanced magnetic properties of the material.

The ribbon 25 may be compacted as cast, i.e., from ribbons, having thicknesses of 15 to 70 μm, widths of up to tens of mm, and lengths of 1 to tens of mm. Alternatively, the ribbons may be broken into smaller pieces, for example having a size of about ten microns to about hundreds of microns in the longer dimension, and from about 10 μm to about 100 μm in the shortest dimension. Alternatively, the ribbon may self-comminute during the quench process into flakes, plates, platelets, or particles.

Individual particles 11 are obtained by comminution, that is size reduction, of the ribbon 25, which is generally relatively brittle, or as fragments, e.g., plates or flakes directly from the chill surface. The ribbon 25 fractures, yielding individual particles, 11. Comminution may be by grinding, micromilling, ball milling, or impact milling, among others. The particles have a particle size as described above.

The individual particles 11, may, after comminution, be coated, for example, with organic or inorganic lubricants, as graphite and $MoS_2$. The coating may be carried out, for example, by blending. One such organic lubricant is "Acrawax", an organic lubricant in the form of 1 to 10 μm spheres that burn off at about 120° C. leaving a slight residue.

The individual particles 11 may be stacked, for example, by ultrasonic signals, vibrating, shaking or agitating, with their major surfaces arrayed substantially in parallel, which may assist in compaction. The particles are then agglomerated or consolidated. Consolidation initially involves compaction. Compaction may be by cold pressing, followed by a separate sintering process, or by hot pressing. Alternatively, compaction may be carried out by die upset, extrusion, forging, rolling, or the like.

Pressing may also include shaping into useful shapes, as where extrusion is incorporated into the pressing process. The loose particles may be pressed to form the desired shaped article and may be thereafter sintered to form the desired mechanically hard article.

Sintering is carried out in a non-oxidizing atmosphere and causes the individual particles 11 to form a single mass. Sintering is carried out at temperatures from about 450°C to about 900° C. Heating may reduce the magnetic parameters of individual fragments of magnetic material. However, the maximum energy product increases with the square of the density of a magnetic body, and compaction may increase the net magnetic properties of the body.

Compaction and consolidation may be by drop forging, as in a process including a semisinter, e.g., at about 650° C to 750° C for under one hour, followed by hot forging, e.g., with a cold die, and the heated, semisintered, hard magnet material, at a pressure of about 52 kPa (20,000 pounds per square inch) to about 650 kPa (250,000 pounds per square inch).

According to an exemplification, compaction and consolidation is carried out by cold pressing, at a pressure of about 260 - 650 kPa (about 100,000 to 250,000 lbs. in.[2]) and preferably about 416 kPa (160,000 lbs/in.[2]), followed by hot pressing at temperatures of about 450 to 900° C for about 1 hour.

According to an alternative exemplification, compaction and consolidation may be carried out using the hot press - die upset technique of R.W Lee, described herein above. In the hot press - die upset process, the melt spun ribbon fragments or particles are uniaxially hot pressed in a high temperature die, e.g., a die heated to about 700° C. This results in plastic deformation of the particles. The partially consolidated, compacted material is then "die upset". That is, it is hot pressed a second time in a die of larger diameter.

According to a preferred exemplification, the hard magnetic material may be compacted and consolidated by rapid omnidirectional consolidation. This process is described in U.S. Patent 4.341,557 of James R. Lizenby for Method of Hot Consolidating Powder With A Recyclable Container Material, Published European Patent Application 94164 of James R. Lizenby for Forming Dense Powder Compact Using Pressure Transmitting Medium , and James R. Lizenby, Walter J. Rozmus, James L. Barnard, and Clifford A. Kelto, Fluid Die Press Consolidation , in Pap. Powder Metal, Superalloys, Met. Powder Rep. Conf., (1980), Vol.2, Paper #12, MPR Publ. Serv. Ltd., Shrewsbury, UK.

The magnetic material powders or particles are subjected to temperatures and pressures sufficient to compact the magnetic material, and deform the container material. The hot pressing temperature is between the plastic deformation and melting temperatures of the container materials.

In a version of the rapid omnidirectional consolidation process, (the ROC Process) a thin walled container is filled with particles, flakes, or powder of the magnetic material. A pressure transmission medium is then cast around the thin walled container inside a mold. Exemplary pressure transmission media have low plastic deformation temperatures, e.g., copper, copper/nickel alloys, and ceramic and glass frits.

The container is heated to the plastic deformation temperature of the pressure transmission medium, and placed in a fitting pot die. The container, pressure transmission medium, and magnetic material are then rammed to pressurize the pressure transmission medium, applying a hydrostatic pressure to the container, and compacting and consolidating the magnetic material.

Alternatively, the magnetic materials may be compacted and consolidated in an organic polymer, e.g., by pressing, extrusion, die forming, injection molding or the like. Exemplary materials include nylons, polyethers, polyepoxides, polyalkyls, polycarbonates, and polyurethanes among others.

According to an exemplification herein contemplated, a precursor alloy or mother alloy may be prepared containing from about 10 to 14 atomic percent total Nd or Pr, about 5 to 10 atomic percent B, about 1 to 5.0 atomic percent silicon, balance Fe, by radio frequency induction melting at above 1200° C and especially about 1600° C for about 30 minutes to about 2 hours under an inert atmosphere, e.g., an argon atmosphere in an MgO crucible. Thereafter, a portion of the mother alloy may be placed in a crucible 31, as a quartz crucible, having a 0.5 to 1.5 mm diameter orifice and especially a 0.7 mm to 1.0 mm diameter orifice 33 spaced about (0,20 to 0,30 inch) 5 to 9 mm from the chill surface 35B, at an angle of about 85° to 90°, in operative relationship to chill surface means 35. The alloy 21 in the crucible 31 is melted under an argon atmosphere, and then discharged under an argon head of about 150 mm of mercury onto chill surface means 35 having a rotating chill surface 35B on a (20 inch) diameter of 58 cm chill wheel 35A, rotating with a surface velocity of about 20 to 30 m/s. The resulting brittle ribbon has a thickness of about 20 to 70 μm and preferably 30 to 40 μm, and a width of about 1 to about 5 mm. The magnetically isotropic particles 11 have a magnetic retention parameter, Q, above about 1.0, a maximum magnetic energy product of above about 119,4 kJ/$m^3$ (15MGOe), and frequently above about 160 kJ/$m^3$, and a remanance of above about 0,9 T.

According to a particularly preferred exemplification of the invention, the particles may be compacted to form a magnetic body. After comminution by hand milling, micromilling, and/or impact milling to a particle size of about 10 to about hundreds of μm in the longest dimension, the particles may be blended with an organic lubricant. The lubricant leaves round lubricant beads on the individual magnetic particles. The particles are pressed, for example, by cold pressing at a pressure of about 416 kPa (160,000 lbs./in.$^2$), and generally from about 208 kPa (80,000) to about 585 kPa (225.000 lbs./in.$^2$) whereby to form a compact. The compact, is then heated to effect consolidation. Typically the heating may be within a temperature range of from about 450° C to about 1160° C for about 1 hour to about 9 hours.

The resulting compacted, consolidated, hard magnetic bodies typically have an isotropic magnetic energy product of about 200 kJ/$m^3$ or more and a magnetic retention parameter, Q, greater than 1.

The invention may be understood by reference to the following examples.

EXAMPLES

A. Summary of Test

In obtaining the results in the following examples, a macroscopically homogeneous ingot (mother alloy) was first prepared by melting together the proper mixture of iron, neodymium, praseodymium, boron, silicon, and aluminum. Thereafter, each ingot was rapidly quenched using melt-spinning to form fragments of ribbon. These as-quenched ribbon samples were individually weighed and measured magnetically, generally using a large pulsed field to pre-magnetize the samples. In some cases, the ribbon samples were subjected to further heat-treatment and subsequently remeasured magnetically. Both the ingot and the final ribbon samples were examined in a scanning electron microscope for microstructure and elemental composition. Furthermore, several samples, both as large ribbon fragments and as powder, were further analyzed for crystallographic structure using x-ray diffraction together with the Rietveld refinement technique. Some batches of ribbon samples were further crushed and compacted into magnetic bodies, and subsequently remeasured magnetically.

B. Preparation of the Ingot (Mother Alloy)

The precursor or mother alloys were generally prepared from the elemental components: iron (99.99% pure electrolytic iron flake), boron (99.7% crystalline boron), Nd and Pr pure rods (99.9% rare earth metals), and silicon (99.99% Si crystals). In some cases, higher purity material was used. In other cases, commercial-grade rare-earth products were used, containing up to 15 weight % iron and up to several weight % of rare earths other than Nd and Pr. The components were weighed out in appropriate proportions, and melted together either by arc-melting on a cooled copper hearth, or by rf induction heating in a crucible consisting either of fused quartz or sintered magnesium oxide ceramic. Arc-melted samples were melted and turned six times, while induction-melted samples were held at a temperature above about 1400 C for 30 minutes to 2 hours, with enough churning in the melt to obtain a macroscopically homogeneous alloy. After solidifying and cooling, the ingot was recovered from the crucible, an outer skin of reaction product was removed, and the ingot broken up into particles of characteristic dimension about 1 centimeter. Composition checks were made on samples of the ingot material to check for homogeneity.

## C. Preparing the Quenched Ribbon

Preparing the quenched ribbon from the ingot was performed in one of three melt-spinning systems. Two of these are simple box spinners with copper wheels ten inches in diameter and one inch thick (the 10" spinner) and twelve inches in diameter and two inches thick (the 12" spinner), respectively. The chambers are suitable for evacuation and subsequent back-filling with an inert processing atmosphere. The crucible in these spinners is unshielded. In the third system (the 20" spinner), the copper wheel is a shell twenty inches in outer diameter, four inches wide, and three inches thick. This wheel is contained within a chamber continuously flushed with an inert process gas. The crucible is enclosed in a shroud of flowing inert gas. In the counter-rotation direction from the crucible, a flow of inert gas counteracts the gas dragged along by the surface of the wheel. In all three systems, the spinner wheel was typically rotated with a surface velocity in the range between 15 and 30 meters per second.

For the 12" and 20" spinners, the crucible is a clear fused quartz cylinder 45 mm inside diameter by about 40 cm long, while for the 10" spinner the crucible is similar but with dimensions 17 mm inside diameter by 25 cm long. The crucible orifice was typically a circular hole in the bottom between 0,5 and 1,5 mm in diameter, and the crucible was positioned with the orifice 5 to 10 mm from the wheel surface. Several chunks of ingot alloy were melted in the crucible using a 450 kHz induction furnace (or a 10 kHz induction furnace for the 12" spinner) until the desired temperature (typically of order 1200 - 1300 °C) was reached, as determined using an optical pyrometer. With rf heating still being supplied, the crucible was then pressurized with inert gas, forcing a jet of molten metal through the orifice onto the rotating wheel. The injection continues until the crucible is empty, or alternatively until not enough molten metal remains in the crucible to couple the rf heating efficiently, and the orifice clogs. In some cases, partial or complete orifice clogging may occur earlier in the run, due to e.g., splashback of the molten metal onto the crucible. Factors such as these may account for some irreproducibility in final material properties for similar process parameters.

## D. Microstructure and Composition.

Samples of both ingot material and quenched ribbon were examined in a JEOL scanning electron microscope for microstructure and composition. Generally, samples were mounted using standard metallographic procedures, and polished before examination. In some cases, ribbon samples were etched in 2% nitric acid in ethanol in order to further define the grain structure. Composition was measured using energy dispersive x-ray spectroscopy (EDS) to measure Fe, Nd, Pr, Si and At concentrations, and wavelength-dispersive x-ray spectroscopy (WDS) to determine the boron concentrations. In either case, the composition was probed to a depth of a micron or less. On the transverse scale, one could probe either a small area of order one square micron, or a larger area using scanning to determine average compositions. This is particularly important for the ingot material, which exhibits substantial phase segregation on the 10-100 µm scale. For the optimum magnetic ribbon material, very little phase separation was visible, with the primary phase apparently homogeneous with no resolvable grain structure down to at least 0.2 microns. Preliminary TEM analysis is discussed in Example IX.

## E. Crystalline Structure And Rietveld Refinements

The crystallographic structure of the ingot material and the subsequent ribbon was determined using x-ray diffraction techniques. Measurements were carried out in a Norelco (Phillips) powder diffractometer using Cu K-alpha radiation (wavelength 0,15 nm). A graphite reflected-beam monochromator was used to eliminate background due to Fe fluorescence. The x-ray source used an excitation voltage of 40 kV and a current of 20 mA. Conventional theta-2-theta x-ray powder diffraction scans were analyzed for peak position and intensity to confirm the crystal structure of the material. The numerical output of high precision step scans with 200 seconds per step and 0.05 degrees per step were further computer-analyzed using the Rietveld powder-pattern refinement technique, to determine the exact lattice parameters, and atomic positions and occupancies of the main $Nd_2Fe_{14}B$-type structure for selected materials. This refinement technique also identified quantitatively a small quantity of bcc alpha-iron.

## F. Magnetic Measurements

Measurements of magnetic properties were made using a Model 9500 computer-controlled vibrating-sample magnetometer (VSM) manufactured by LDJ, Inc., having a maximum applied magnetic field of $1,75 \cdot 10^3$ 2kA/m (22 kOe). The values of magnetic field H were determined under feedback-control with a calibrated Hall probe. The measurement software was modified in-house to permit measurement of both major and minor hysteresis loops of permanent magnet materials with high coercive forces. Before every set of measurements, the calibration of the magnetization M was checked using a standard (soft magnetic) nickel sphere (from the U.S. National Bureau of Standards). The calculation of the magnetization of the magnetic materials required a measurement of the sample mass (of order one milligram or less for a typical ribbon fragment of order 5 mm long by 2 mm wide by 30 to 50 $\mu$m thick) using a Cahn-21 automatic electrobalance (with precision to 1 $\mu$gr), and an estimate of the density. For the materials in the examples to be presented below, the density was consistently taken to be 7.4 grams/cc, slightly smaller than the value of 7.6 grams/cc appropriate for pure stoichiometric $Nd_2Fe_{14}B$. Had we used the larger density, the calculated values of magnetization would have been increased proportionately over those we report in the examples below.

Each magnetic ribbon sample was mounted using adhesive tape onto a sample-holding rod. In general, the sample was pre-magnetized in a given direction using a pulsed magnetic field (of peak magnitude up to 120 kOe) produced by an LDJ Inc. capacitance discharge magnetizer. This was often necessary to achieve proper magnetic measurements of the high-performance permanent magnet material of the invention, since the maximum field of the VSM magnet was generally insufficient to obtain complete saturation of the magnetic moments. Following this, the sample was mounted in the gap of the magnet of the VSM and positioned at the saddle point of the detection coils. Following standard procedures, pre-magnetized samples were saddled in zero applied field, while un-magnetized (virgin) samples were saddled in a 400 kA/m (5 kOe) field. The measurement was carried out by ramping the field from zero to a maximum (typically 1751 kA/m (22 kOe)), through zero again to a negative maximum, and then back through zero to the positive maximum again, while the entire hysteresis loop was recorded, (magnetization M vs. applied magnetic field H). The program then determined the chief magnetic parameters, the remanent magnetization or remanence M (the positive y-intercept of the hysteresis curve), measured in units of kilogauss, the intrinsic coercive force or coercivity $H_c$ (the negative x-intercept of the hysteresis curve), measured in units of kilooersteds, and the maximum energy product (the maximum negative value of the product of the induction $B = H + M$ and the field H), measured in units of megagaussoersteds.

In most of the following examples, ribbon samples were measured magnetically along three orthogonal directions: first, in the "x-direction", in the plane of the ribbon parallel to the spin direction (parallel to the length), second, the y-direction, in the plane of the ribbon perpendicular to the spin direction (parallel to the width), and finally in the z-direction, perpendicular to the plane of the ribbon. In each case, the sample was pre-magnetized in the appropriate direction using the pulsed magnetic field. For the perpendicular z-direction, a standard software-correction was made for the demagnetizing effect of the ribbon geometry. Generally, a demagnetizing coefficient N = 0.75 was found to be provide a reasonable correction. Had the larger value N = 1.0 been used, which is more common for measurements perpendicular to a thin plate, the inferred magnetic measurements would have been even higher than those stated in the below examples (but the hysteresis loops would appear to have an unphysical shape). The value of the magnetic retention parameter, Q, is calculated using N = 0.75 for the z direction.

The value of the magnetic retention parameter

$$Q = Sum_{x,y,z,}(M_y/M_s)^2$$

is calculated using N = 0.75 for the z-direction. In all the examples a worst case value of 16 kG is assumed for $M_s$. The applied magnetic field necessary to fully saturate these materials should not be underestimated. In particular, once a virgin (unmagnetized) sample has been magnetized in an arbitrary direction, it is often extremely difficult to completely re-magnetize it in another direction. Examples of this magnetic training effect (magnetic training) are discussed below

EXAMPLE I - 400A Series - Wheel-speed dependence of magnetic parameters.

This example describes the samples described in Example I of the copending U.S. Application Serial No. 707,343, of which the present application is a continuation-in-part.

The procedure described above was followed to prepare, quench and test an alloy of Iron-(Neodymium-Praseodymium)-Boron-Silicon. The consolidation was carried out by rf induction heating in a quartz crucible. The ingot had the following measured composition.

Iron, atomic percent 78.20
Boron, atomic percent 7.25
Neodymium, atomic percent 10.85
Praesodymium, atomic percent 2.75
Silicon, atomic percent 1.0

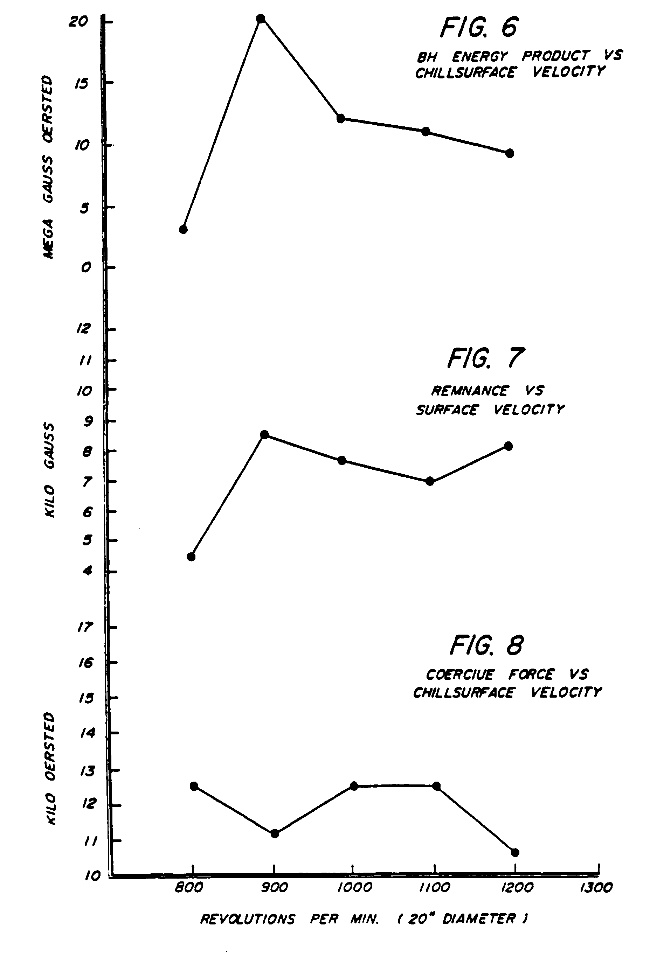

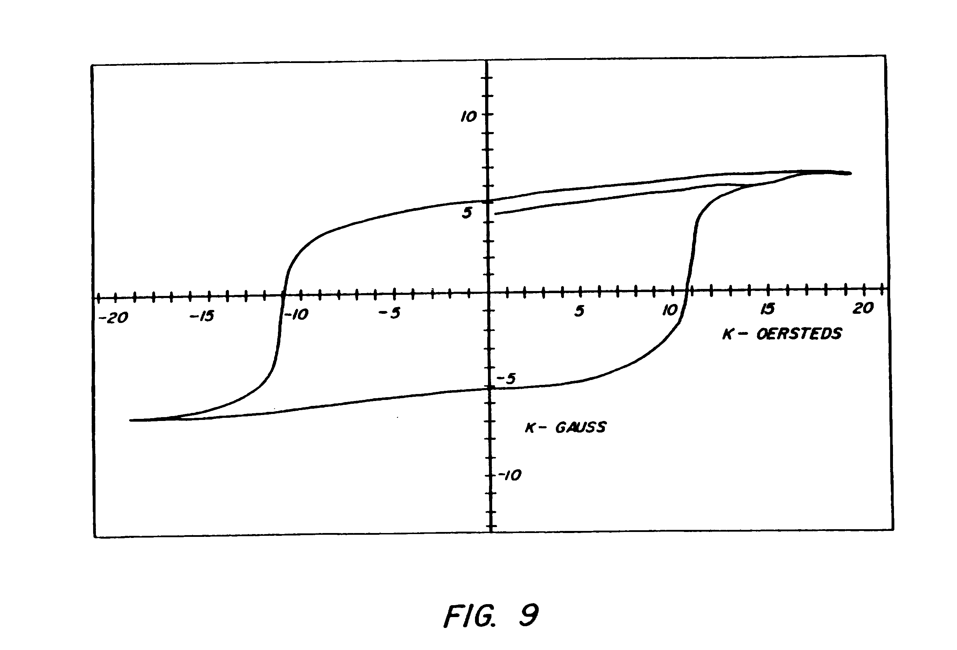

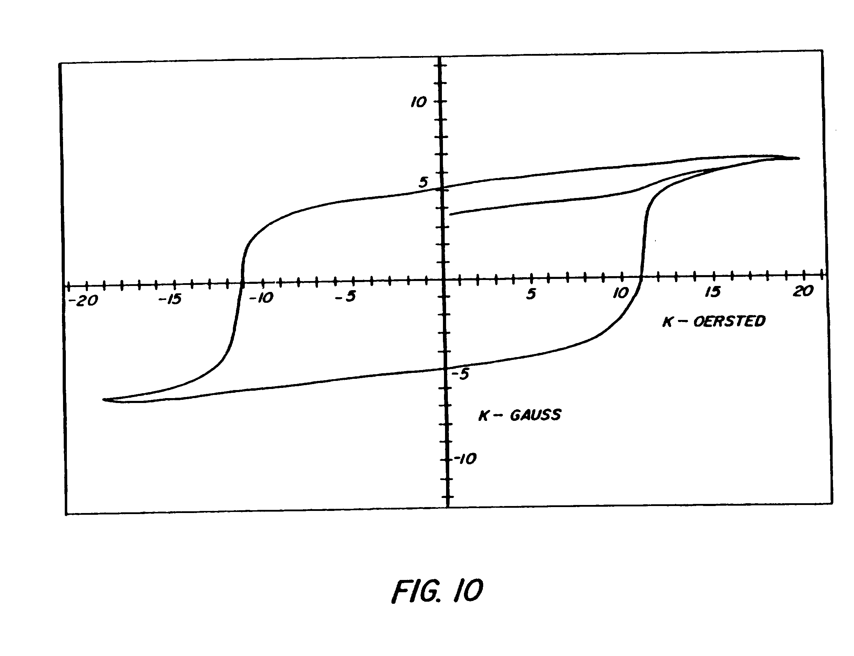

After consolidation, samples of the ingot were melted and ejected onto the quench surface (20" wheel) rotating at the velocities shown. The resulting ribbons, i.e., samples and fragments thereof, were magnetized, the magnetization parmeters measured in the plane, and typical results shown below were obtained. Energy product versus chill surface velocity is reproduced in Figure 6. Remanence and coercive force versus chill surface velocity are reproduced in Figures 7 and 8 respectively. Figures 9 and 10 are B-H curves for ribbon samples quenched at 900 rpm.

The above magnetization curves were measured without first pre-magnetizing the samples, as discussed above, so that the magnetic properties may be slightly less than optimum. However, the trends shown below should still be valid.

| Chill Wheel Velocity (rpm) | 800 | 900 | 1000 | 1100 | 1200 |
|---|---|---|---|---|---|
| Sample Ref. No. 400- | AA08 | AA10 | AB02 | AB06 | AB11 |
| Remanent Magnetization (T) | 0,43 | 0,86 | 0,77 | 0,73 | 0,83 |
| Coercive Force $10^3$ kA/m (Kilooersted) | .1 (12,7) | 0,89 (11,2) | 0,99 (12,5) | 1,02 (12,8) | 0,86 (10,8) |
| Energy Product kJ/m$^3$ (megagaussoersted) | 24 (3) | 160 (20) | 96 (12) | 88 (11) | 80 (10) |

The composition of a ribbon sample of this series, #400AA03, was measured (by EDS) to be 78.4 at.% Fe, 11.0 at.% Nd, 2.7 at.% Pr, 1.9 at.% Si, plus a nominal 6% B. This is apparently slightly richer in Si than the ingot alloy.

The rather square hysteresis loops presented in Figures 9 and 10, together with the high values of remanance, have been conventionally associated in the prior art with substantially crystallographically oriented magnetic materials, measured in the direction of easy-axis orientation. This led the applicants to earlier infer that the as-quenched materials of the present invention were also likely to be preferentially oriented. More detailed measurements have shown, however, that the as-quenched materials exhibit performance conventionally associated with oriented magnets, but they exhibit this performance in every direction, i.e. they exhibit no preferred orientation. This is shown with the direct reference to the present material in Example II below.

EXAMPLE II 400AA10 - Magnetic Isotropy and Rietveld Refinement.

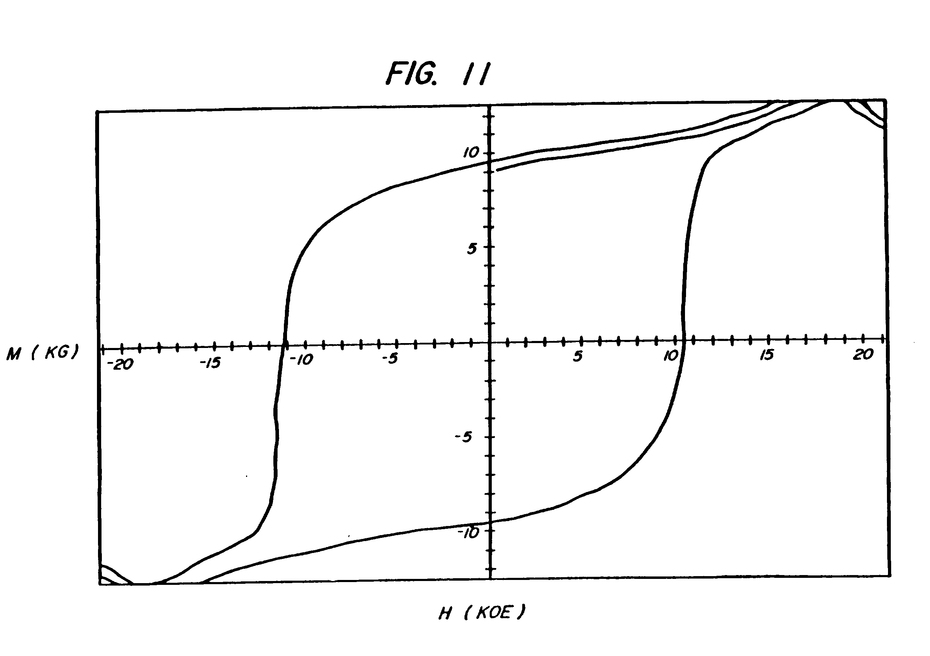

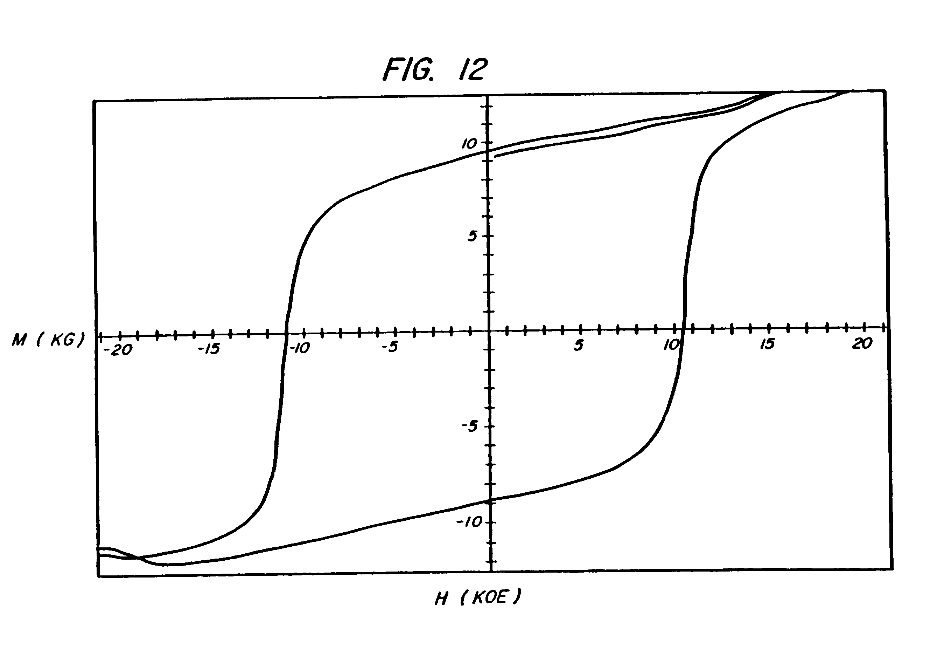

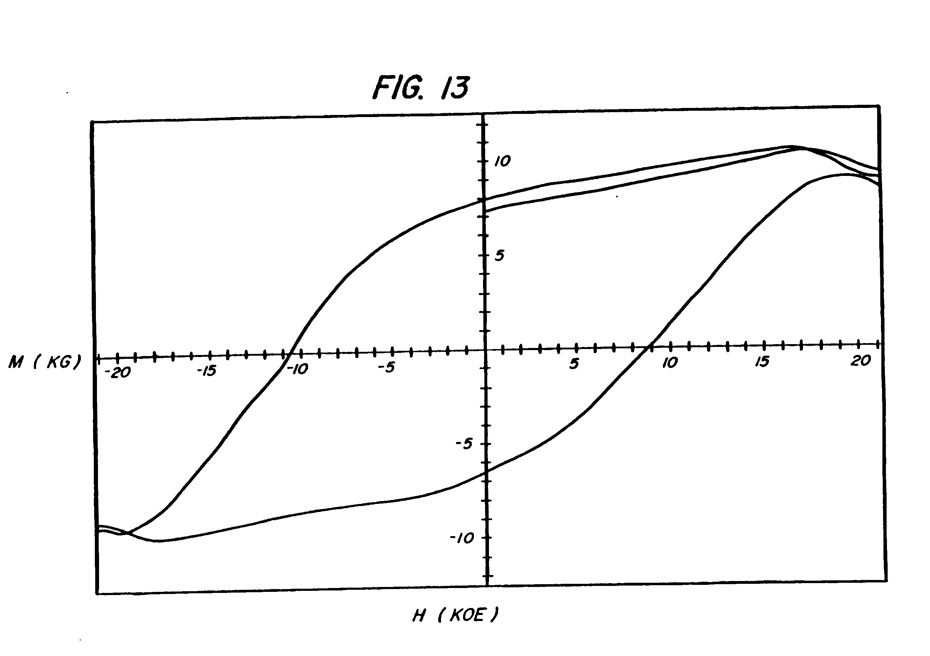

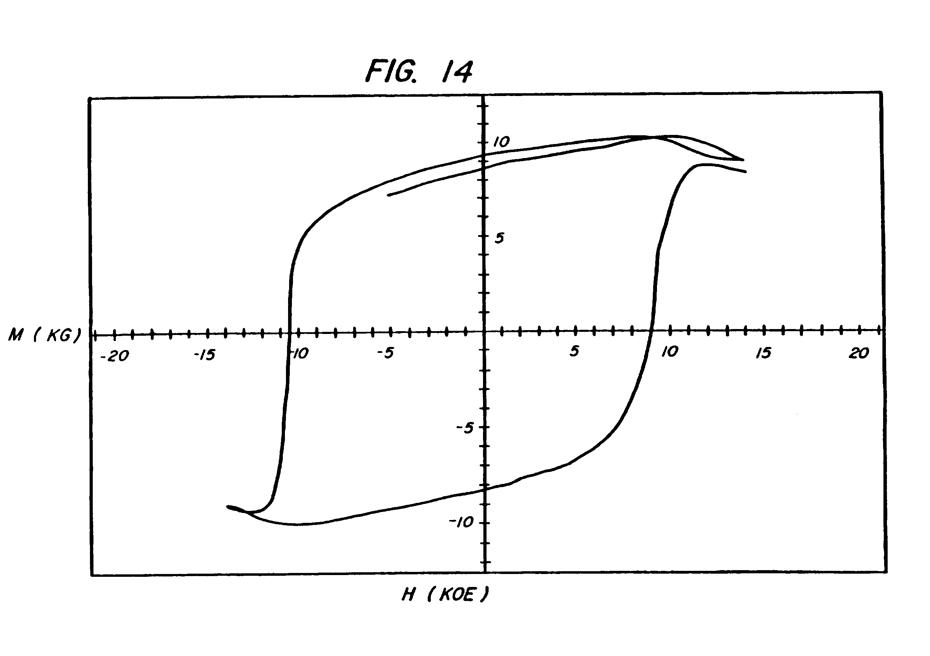

One ribbon sample (400AA10(7)) i.e., one of the fragments of Example I above with the chill wheel spun at 900 rpm, was re-tested, this time using pulsed pre-magnetizing, in each of three orthogonal directions, as discussed in F above. The resulting hysteresis curves are presented in Figures 11, 12 and 13. In the direction perpendicular to the ribbon surface (z-direction), a demagnetizing factor of 0.75 was applied leading to the corrected hysteris curve of Figure 14. The results are summarized as follows:

$$
\begin{array}{lll}
\text{x-direction:} & \text{Mr=}\left.\begin{array}{l}10\ 2\\10\ 1\\10\ 0\end{array}\right\}T & ,\ \text{Hc=}\left.\begin{array}{l}0{,}92\\0{,}92\\0{,}88\end{array}\right\}\ .10^3\ \text{kA/m} \quad \text{BH)max=}\left.\begin{array}{l}165{,}6\\160{,}8\\164{,}0\end{array}\right\}\ \text{kJ/m}^3 \\
\text{y-direction:} & & \\
\text{z-direction:} & &
\end{array}
$$

This clearly represents a magnetically isotropic material. From these results, using an estimate of saturation magnetization $M_s = 1{,}6$ T, a calculation for the magnetic retention parameter gives Q=1.2. This is substantially greater than the value 0.75 expected for an isotropic magnet by the conventional Stoner-Wohlfarth model of non-interacting grains, and also greater than the maximum possible value Q = 1 for an aligned material within the conventional theory. Other quench parameters were for this ribbon sample were:

| | |
|---|---|
| Crucible | 1,9cm (3/4") i.d. thin-walled clear fused quartz |
| Crucible orifice | 0,8mm |
| Crucible pressurizing gas | 20kPa (3 psi) Argon |
| Chamber gas | 13kPa (2 psi)g nitrogen |
| Crucible - wheel distance | 6 mm |
| Charge Size | 40 grams |
| Ribbon size | 1,9mm wide x 30-38 μm thick |

Some additional ribbon samples of run 400AA10, the material of Example I spun at 900 rpm, were further analyzed for magnetic parameters and crystallographic structure. This is the identical material that was given as Example II in the earlier patent application #801,996, of which the present application is a continuation-in-part. The composition of the ribbon was measured to be about $Fe_{78}Nd_{11}Pr_3Si_2B_6$.

The magnetic parameters of 5 representative ribbons were measured in-plane along the spin direction, after pre-magnetizing using a 120 kOe pulsed field, and are shown in the Table below:

| Sample Ref No. | 400AA10(9) | 400AA10(8) | 400AA10(6) | 400AA10(5) | 400AA00(7) |
|---|---|---|---|---|---|
| $M_r$ T (kG) | 0,98 (9,8) | 1,11 (11,1) | 1,03 (10,3) | 405 (10,5) | 1,11 (11,08) |
| $H_c$ ·10kA/m (kOe) | 1,4 (17,7) | 0,86 (11,0) | 0,96 (12,0) | 0,95 (11,9) | 0,08 (1,0) |
| BH/max kJ/m³ (MGOe) | .150 (18,8) | 195 (24,5) | 167 (21,0) | 171 (21,5) | 34 (4,3) |

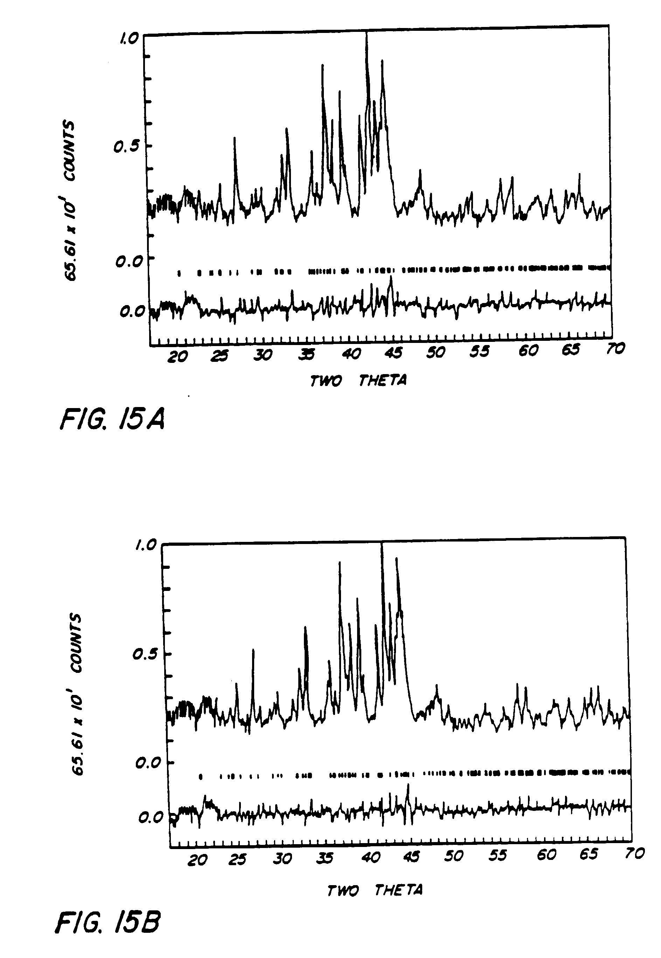

Some other ribbons samples of this run were also examined using x-ray diffraction (as described earlier) together with the Rietveld powder-pattern refinement calculation, to yield the curves in Fig. 15A and 15B (these are the same as Figs. 2A and 2B of #801.996). These curves, and the detailed Rietveld parameter summary chart (Table VII) presented below, indicate that the material is largely composed of a phase which is very similar in structure to $Nd_2Fe_{14}B$, with a small quantity of second-phase bcc iron.

Example III - 438AA Series - Wheel-speed dependence of magnetic parameters.

This example describes the samples described in Example II of the copending U.S. Application Serial No. 707,343, of which the present application is a continuation-in-part.

The procedure described above was followed to prepare, quench and test an alloy of Iron-Neodymium-Boron-Silicon. The ingot had the measured composition (EDS and WDS) of 79 at.% Fe, 11.7 at.%Nd, 7.8 at.%B, and 1.6 at.% Si. It was prepared by induction heating in a quartz crucible. The applicants had earlier indicated the nominal composition of the elements (which do not include Si) added to the ingot; the silicon comes presumably from partial reaction with the walls of the crucible.

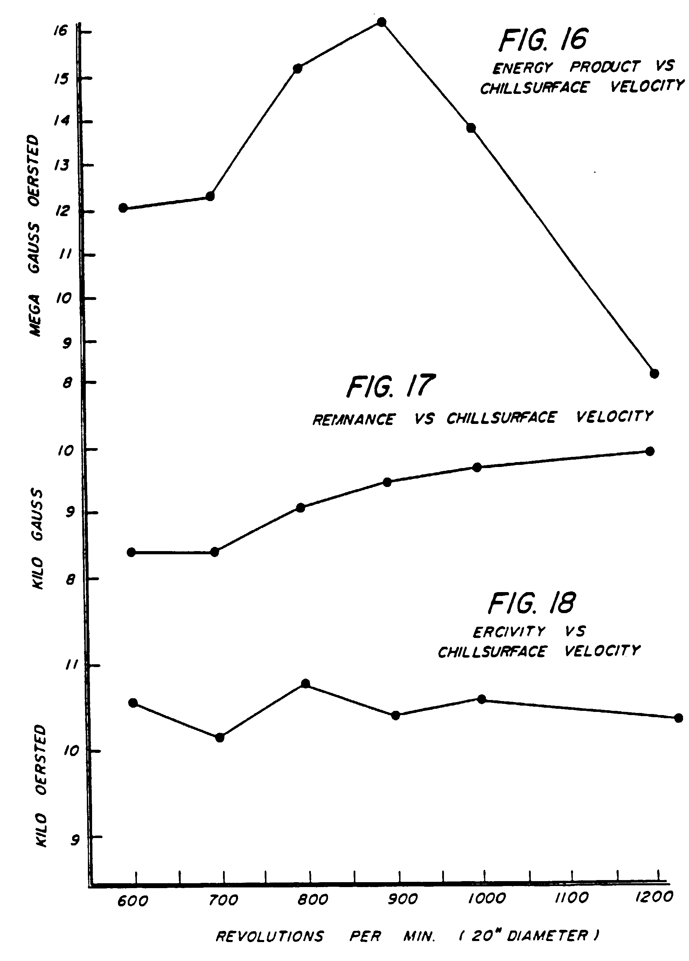

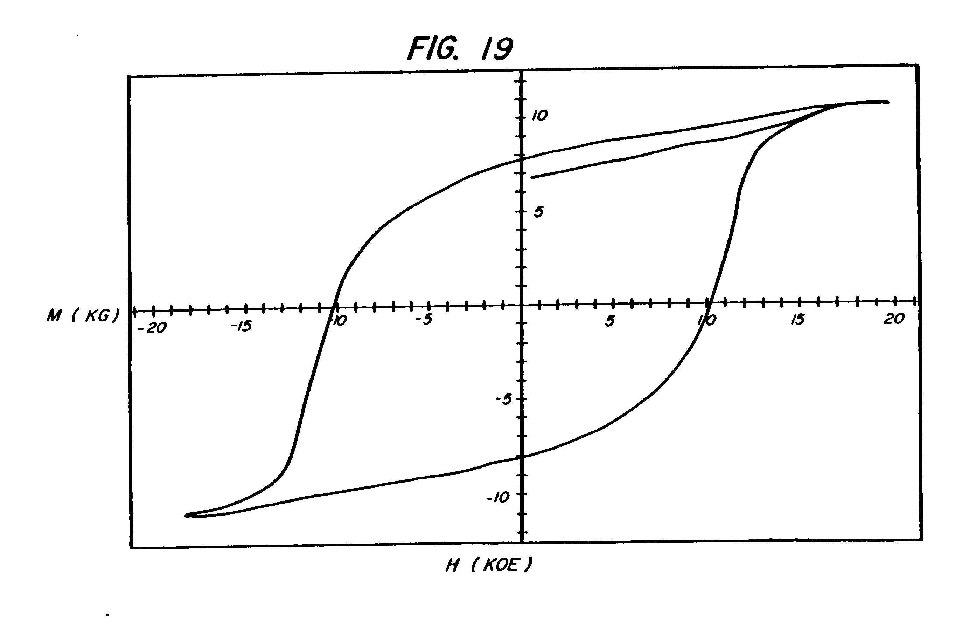

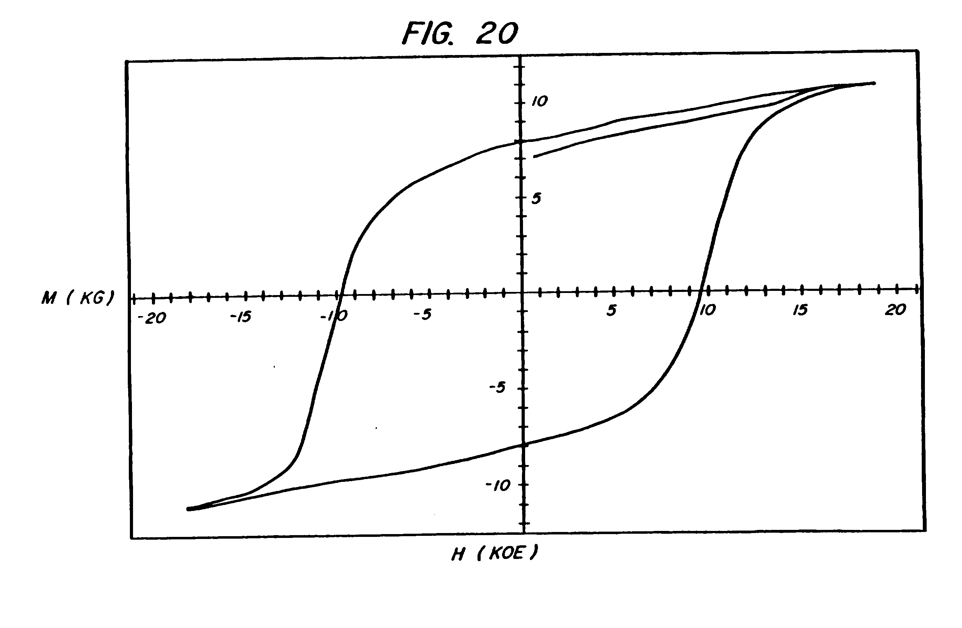

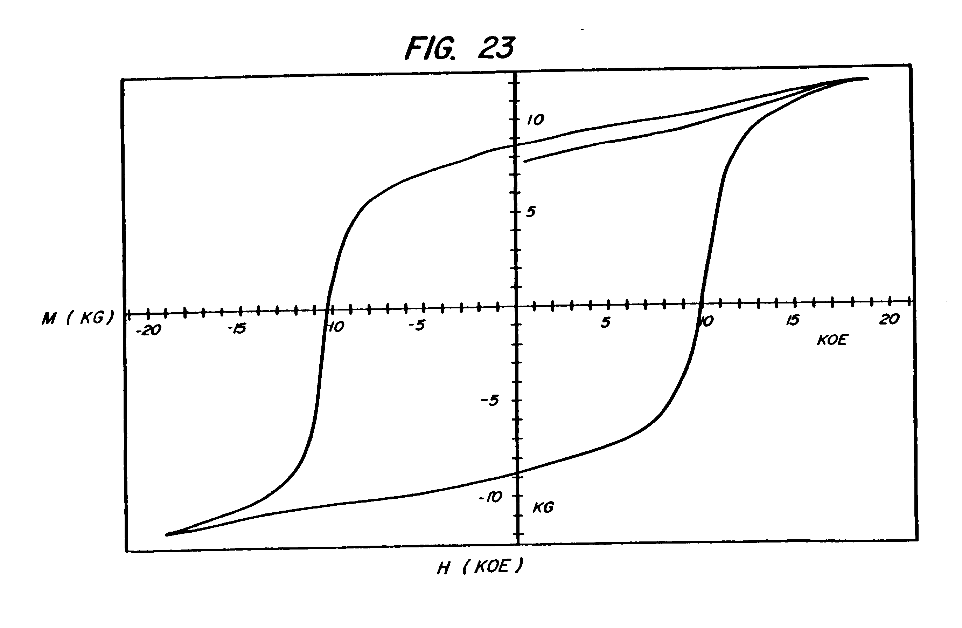

After consolidation, four samples of the alloy were melted and ejected onto the quench surface rotating at the velocities shown. The resulting ribbons were magnetized, the magnetization parameters measured in the plane, and the mean results shown below were obtained. Mean energy product versus chill surface velocity is reproduced in Figure 15. Mean remanence versus chill surface velocity is reproduced in Figure 17. Mean coercivity versus chill surface velocity is reproduced in Figure 18. Figures 19, 20, 21, 22 and 23 are M-H plots for high energy product samples quenched at 600, 700, 800, 900 and 1000 revolutions per minute respectively.

The quench parameters of these samples were similar to those in Example II above, except that the crucible-wheel distance was 9mm here, and the ribbon dimensions were typically 1.8mm wide by 38-45 µm thick.

The magnetization curves shown here were measured without first pre-magnetizing the samples, as discussed above, so that the magnetic properties may be slightly less than optimum. However, the trends shown below should still be valid.

| Chill Wheel Velocity (rpm) | 600 | 700 | 800 | 900 | 1000 | 1200 |
|---|---|---|---|---|---|---|
| Sample Ref. No. 438- | AA6 | AA7 | AA8 | AA9 | AA5 | AA4 |
| Remanence T (kG) | 0,84 (8,4) | 0,84 (8,4) | 0,91 (9,1) | 0,94 (9,4) | 0,95 (9,5) | 0,96 (9,6) |
| Coercivity 10³ ·kA/m (kOe) | 0,84 (10,6) | 0,81 (10,2) | 0,86 (10,8) | 0,83 (10,4) | 0,84 (10,6) | 0,83 (10,4) |
| Energy Product kJ/m³ (MGOe) | 96,3 (12,1) | 97,9 (12,3) | 121,8 (15,3) | 128,9 (16,2) | 109,8 (13,8) | 64,5 (8,1) |

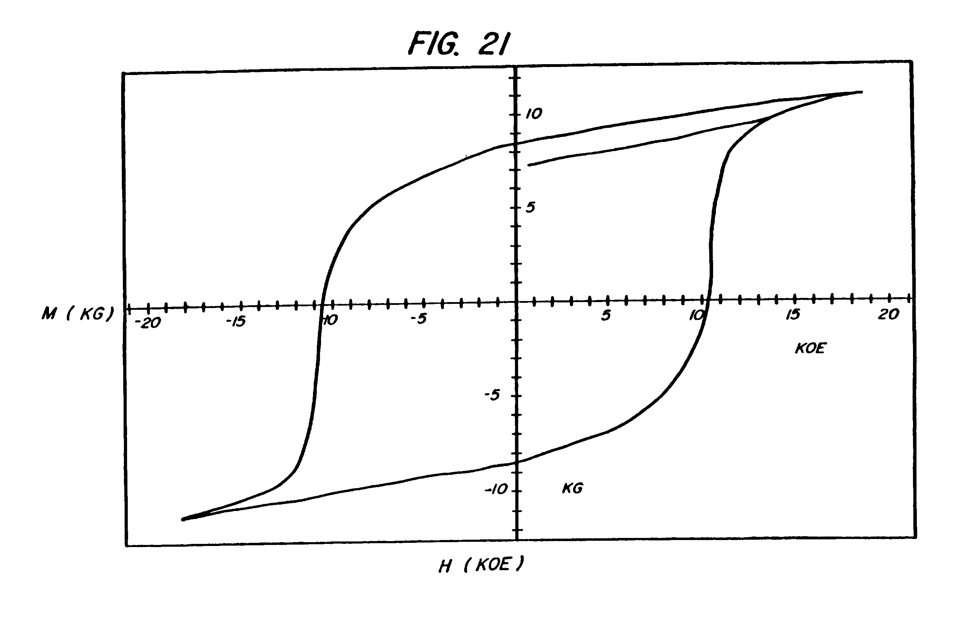

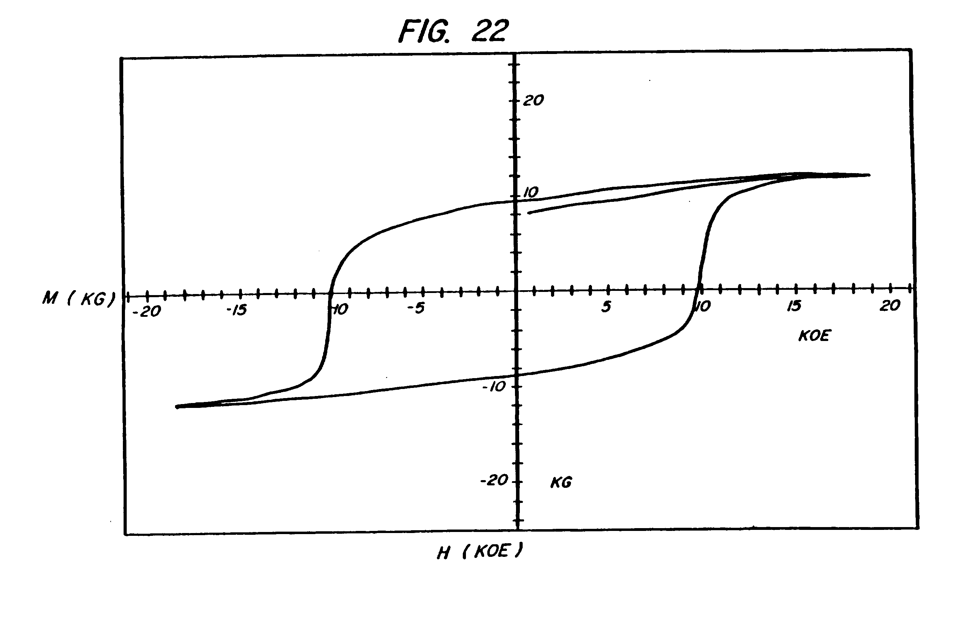

The rather square hysteresis loops presented in Figs. 21 and 22, together with the high values of remanence, have been conventionally associated in the prior art with substantially crystallographically oriented magnetic materials, measured in the direction of easy-axis orientation. This led the applicants to earlier infer, that the as-quenched materials in this example were also likely to be preferentially oriented. More detailed measurements in Example IV on a sample of this set have shown directly that the materials of the present invention are not oriented.

EXAMPLE IV

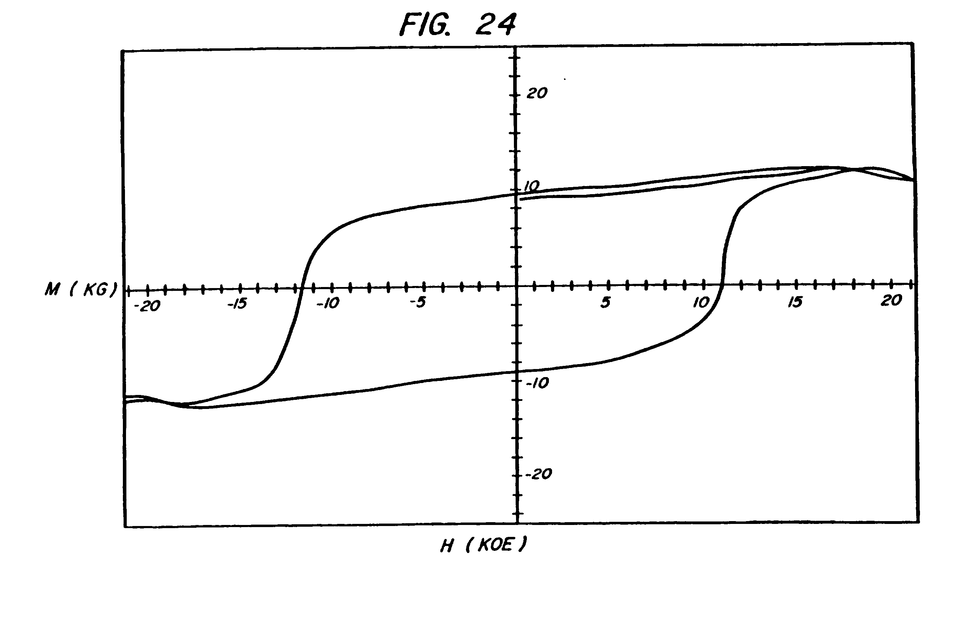

One ribbon sample 438AA5(1), i.e. one of the fragments of Example III above with the chill wheel spun at 1000 rpm, was re-tested, this time using pulsed pre-magnetizing, in each of three orthogonal directions, as discussed above. The results are presented in Figs. 24. 25, and 26. In the direction perpendicular to the ribbon surface (z-direction), a demagnetizing factor of 0,75 was applied. The results are summarized as follows:

$$\begin{array}{l}
\text{x-direction:} \quad M_r = 10.2 \\
\text{y-direction:} \quad 09.4 \\
\text{z-direction:} \quad 08.8
\end{array} \Bigg\} T
\qquad
\text{Hc} = \begin{array}{l} 0,97 \\ 0,96 \\ 0,88 \end{array} \Bigg\} .10^3 \text{ kA/m}
\qquad
\text{BH)max} = \begin{array}{l} 166 \\ 143 \\ 127 \end{array} \Bigg\} \text{ kJ/m}^3$$

This clearly represents a permanent magnetic material that is substantially isotropic. The small amount of apparent anisotropy may be an artifact of the "magnetic training" effect that was referred to earlier, since the greatest magnetic parameters occur in the direction of initial magnetization.

From these results, using an estimate of saturation magnetization $M_s = 1,6$ T, a calculation for the magnetic retention parameter give Q = 1.05. This is substantially greater than the value 0,75 expected for an isotropic magnet by the conventional Stoner-Wohlfarth model on non-interacting grains, and also greater than the maximum possible value Q = 1 for an oriented material within the conventional theory.

EXAMPLE V Sample 411AB02 - Magnetic Properties and Rietveld Refinement

The material of this example is the material presented as Example I of the co-pending patent application 801,996.

The composition of the ingot, which was rf induction melted in a pyrolytic boron nitride crucible, was measured (by EDS and WDS - ref. no. 2259) to be $Fe_{77.5}Nd_{13.1}Pr_{0.8}B_{8.0}Si_{0.6}$ where the silicon figure may be comparable to the background level of the measurement.

The quench parameters were similar to those for Example IV above, except that the velocity of the 20" spinner wheel was 800 rpm, and the ribbon dimensions were 1.8mm wide x 38 to 45 $\mu$m thick.

The wheel speed for this sample was slower than the optimum value, giving magnetic parameters (pre-magnetized) for some typical ribbon samples measured along the spin direction as follows:

| Sample | $M_r$ (T) | $H_c$ ($10^3$ kA/m) | $(BH)_{max}$ (kJ/m$^3$) |
|---|---|---|---|
| 411AB02(7) | 0,78 | 1,24 | 70,8 |
| 411AB02 (5) | 0,85 | 1,24 | 78,8 |
| 411AB02(6) | 0,89 | 1,20 | 86,8 |

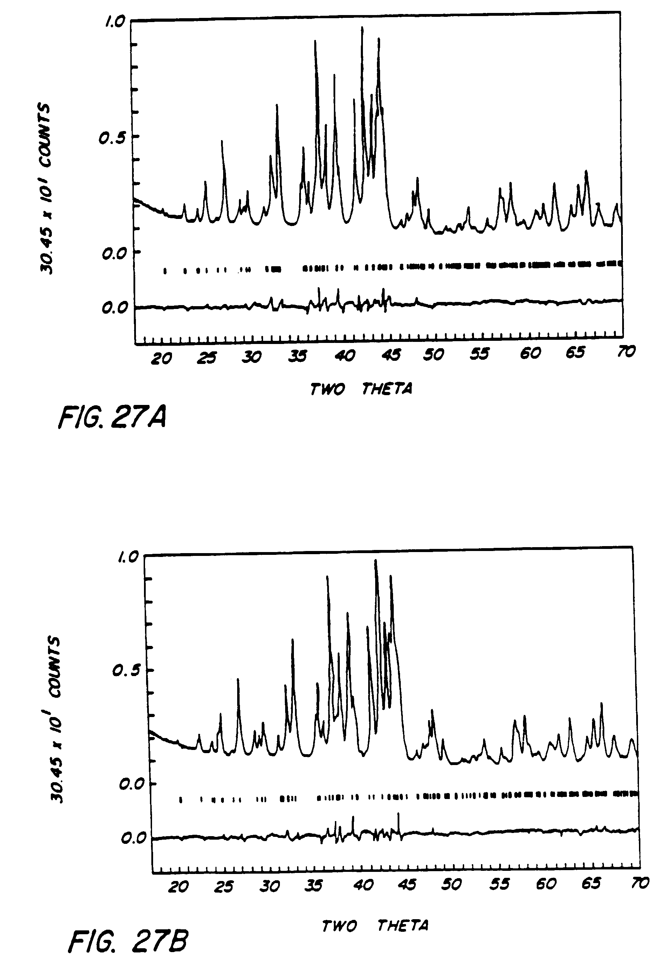

Powder produced from this set of ribbons was subjected to x-ray diffraction. The Rietveld refinements of these powder diffraction plots, before and after refinement for alpha-iron, are shown in Figs. 27A and 27B. The refined atomic coordinates for this example are exhibited in summary Table VIII below. These coordinates do not give a clear indication of correlation with magnetic parameters, within the proper composition range. This confirms our belief that part of the structure necessary for optimum magnetic performance occurs on a scale larger than the atomic scale directly probed by x-ray diffraction.

A measurement of composition (EDS, 6% nominal B assumed) on a sample of this powdered ribbon gave the following results: 76.9 at.% Fe, 14.2 at.% Nd, 0.7 at.% Pr, 2.2 at.% Si. Note that this is richer in Si than the ingot material.

EXAMPLE VI - Sample 435AA06 - Magnetic Properties and Rietveld Refinement

The material of this example is the material presented as Example III of the co-pending patent application 801,996.

The composition of the ingot, which was rf induction melted in a quartz crucible, was measured (by EDS and WDS - ref. no. 2396) to be $Fe_{(79.3)}Nd_{(12.1)}B_{(7.1)}Si_{(1.5)}$.

The quench parameters were similar to those for Examples IV and V above, except that the velocity of the 20" spinner wheel was 900 rpm, and the ribbon dimensions were 1.4mm wide x 35 to 48 microns thick.

The magnetic parameters (pre-magnetized) for some typical ribbon samples measured along the spin direction are as follows:

| Sample | $M_r$ (T) | $H_c$ ($10^3$ kA/m) | $(BH)_{max}$ (kJ/m$^3$) |
|---|---|---|---|
| 435AA06(11) | 0,90 | 1,37 | 140 |
| 435AA06(10) | 0,93 | 0,98 | 145 |
| 435AA06(9) | 0,95 | 0,88 | 149 |

(continued)

| Sample | $M_r$ (T) | $H_c$ ($10^3$ kA/m) | $(BH)_{max}$ (kJ/m$^3$) |
|---|---|---|---|
| 435AA06(8) | 0,92 | 0,87 | 74 |
| 435AA06(7) | 0,97 | 0,85 | 55 |

The lower energy product of some of the ribbon samples is, we believe, due to partial incusion of lower coercivity material, which in turn may be caused by small variations in sensitive quench parameters during the run.

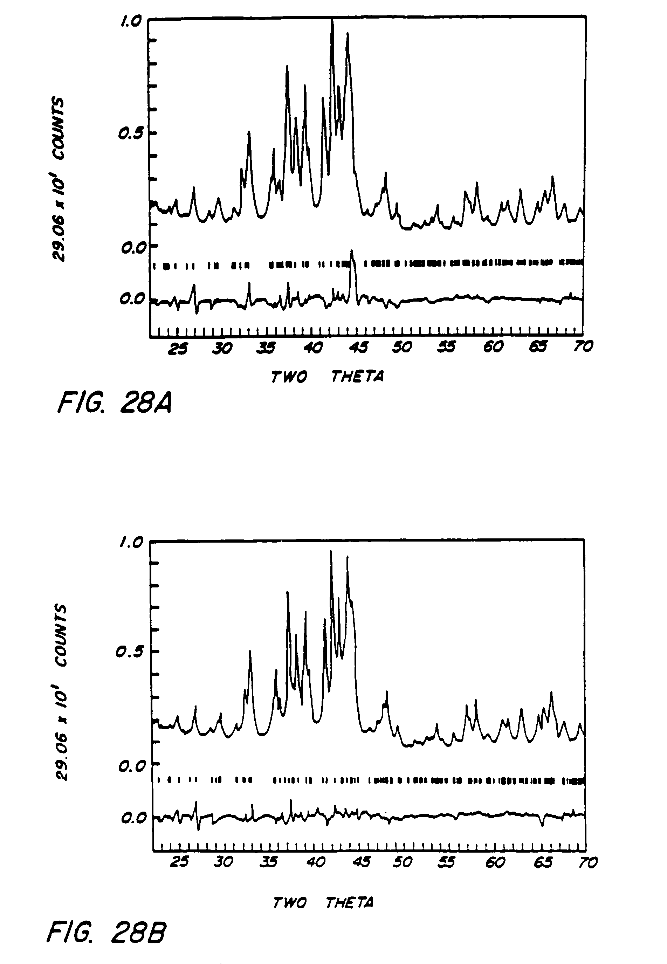

Powder produced from this set of ribbons was subjected to x-ray diffraction. The Rietveld refinements of these powder diffraction plots, before and after refinement for alpha-iron, are shown in Figs. 28A and 28B. The refined atomic coordinates for this example are exhibited in summary Table VII.

A measurement of composition (EDS, 6% nominal B assumed) on a sample of this powdered ribbon gave the following results: 78.8 at.% Fe, 12.5 at.% Nd, and 2.7 at.% Si. Note that this is richer in Si than the ingot material.

EXAMPLE VII - Sample 376AV08 - Magnetic properties and Rietveld Refinement.

The material of this example is the material presented as Example IV of the co-pending patent application 801,996.

The composition of the ingot, which was rf induction melted in a quartz crucible, was measured (by EDS and WDS - ref. no. 721) to be $Fe_{75.4}Nd_{15.1}Pr_{0.5}B_{6.3}Si_{2.7}$.

The quench parameters were similar to those for Examples IV and V above, except that the velocity of the 20" spinner wheel was 700 rpm, the orifice diameter was 0.88mm, the crucible discharge pressure was 23.8 kPa (3.5 psi), and the ribbon dimensions were 1.1 mm wide x 33 to 43 $\mu$m thick.

Magnetic parameters (pre-magnetized) for some typical ribbon samples were measured along the spin direction as follows:

| Sample | $M_r$ (T) | $H_c$ ($10^3$ kA/m) | $(BH)_{max}$ (kJ/m$^3$) |
|---|---|---|---|
| 376AV08(7) | 1,23 | 0,70 | 182 |
| 376AV08(8) | 1,23 | 0,66 | 188 |
| 376AV08(9) | 1,22 | 0,59 | 163 |
| 376AV08(10) | 1,06 | 0,88 | 150 |
| 376AV08(11) | 1,07 | 0,92 | 123 |
| 376AV08(12) | 1,12 | 0,84 | 165 |
| 376AV08(6) | 1,19 | 0,62 | 115 |

Powder produced from this set of ribbons was subjected to x-ray diffraction, the Rietveld reginements of these powder diffraction plots, before and after refinement for alpha-iron, are shown in Figs. 1A and 1B. The refined atomic coordinates for this example are exhibited in Table VI earlier, and again in summary Table VII below.

A measurement of composition (EDS. 6% nominal B assumed) on a sample of this powdered ribbon gave the following results: 79.6 at.% Fe, 12.7 at.% Nd, and 1.7 at.% Si.

Additional magnetic measurements were carried out on one ribbon sample, 376AV08(8), to check for magnetic isotropy. These yielded the following results, using a demagnetizing factor N = 0.75 for the direction perpendicular to the ribbon plane:

| | Field in plane of ribbon parallel to spin direction | Field in plane of ribbon perpendicular to spin direction | Field perpendicular to ribbon (uncorrected) | Field perpendicular to ribbon (corrected using N=0.75) |
|---|---|---|---|---|
| $BH_{max}$ | 192 | 192 | 78 | 176 (kJ/m$^3$) |
| $M_r$ | 1,24 | 1,23 | 0,8 | 1,13 (T) |
| $H_c$ | 0,68 | 0,68 | 0,67 | 0,66 ($10^3$ kA/m) |

Using a value of 16 kG for the saturation magnetization $M_s$, the calculated value for the magnetic retention parameter is Q=1,7, using the results corrected for demagnetization effects. Even using the uncorrected curve, the value of Q would still be 1.4, substantially greater than the maximum value of 1 expected from the prior art.

## Table VII

### Reitveld Refined Powder X-Ray Diffraction Data for Melt Spun Ribbons

| Sample | 411AB02 | 411AB02*<br>Refined | 400AA10 | 400AA10*<br>Refined |
|---|---|---|---|---|
| Nd(1)-x | .2682 | .2687 | .2648 | .2677 |
| Nd(1)-y | .2682 | .2687 | .2648 | .2677 |
| Nd(1)-z | 0.0000 | 0.0000 | 0.0000 | 0.0000 |
| Nd(1)-n | .2260 | .2270 | .2100 | .2100 |
| | | | | |
| Nd(2)-x | .1410 | .1413 | .1371 | .1392 |
| Nd(2)-y | -.1410 | -.1413 | -.1371 | -.1392 |
| Nd(2)-z | 0.0000 | 0.0000 | 0.0000 | 0.0000 |
| Nd(2)-n | .2260 | .2260 | .2200 | .2200 |
| | | | | |
| Fe(1)-x | .2242 | .2245 | .2185 | .2201 |
| Fe(1)-y | .5657 | .5657 | .5673 | .5677 |
| Fe(1)-z | .1290 | .1277 | .1336 | .1286 |
| Fe(1)-n | .9500 | .9500 | 1.0100 | .9700 |
| | | | | |
| Fe(2)-x | .0383 | .0377 | .0386 | .0372 |
| Fe(2)-y | .3607 | .3613 | .3533 | .3566 |
| Fe(2)-z | .1760 | .1763 | .1735 | .1746 |
| Fe(2)-n | .9500 | .9400 | 1.1100 | 1.0500 |
| | | | | |
| Fe(3)-x | .0994 | .1011 | .0970 | .0998 |
| Fe(3)-y | .0994 | .1011 | .0970 | .0998 |
| Fe(3)-z | .2026 | .2032 | .1978 | .2012 |
| Fe(3)-n | .4780 | .4720 | .5100 | .4700 |
| | | | | |
| Fe(4)-x | .3172 | .3170 | .3153 | .3154 |
| Fe(4)-y | .3172 | .3170 | .3153 | .3154 |
| Fe(4)-z | .2300 | .2301 | .2320 | .2325 |
| Fe(4)-n | .4960 | .4930 | .5400 | .5100 |
| | | | | |
| Fe(5)-x | .5000 | .5000 | .5000 | .5000 |
| Fe(5)-y | .5000 | .5000 | .5000 | .5000 |
| Fe(5)-z | .1163 | .1160 | .1123 | .1117 |
| Fe(5)-n | .2180 | .2160 | .2400 | .2300 |
| | | | | |
| Fe(6)-x | 0.0000 | 0.0000 | 0.0000 | 0.0000 |
| Fe(6)-y | .5000 | .5000 | .5000 | .5000 |
| Fe(6)-z | 0.0000 | 0.0000 | 0.0000 | 0.0000 |
| Fe(6)-n | .2300 | .2300 | .2300 | .2300 |
| | | | | |
| B(1)-x | .3370 | .3420 | .3202 | .3233 |
| B(1)-y | -.3370 | -.3420 | -.3203 | -.3233 |
| B(1)-z | 0.0000 | 0.0000 | 0.0000 | 0.0000 |
| B(1)-n | .3200 | .3100 | .4400 | .3700 |
| | | | | |
| a (Angstroms) | 8.7960 | 8.7930 | 8.8010 | 8.8000 |
| c (Angstroms) | 12.2220 | 12.2220 | 12.2210 | 12.2210 |
| | | | | |
| Rw | 5.26 | 5.30 | 10.44 | 9.64 |
| Rn | 4.16 | 4.16 | 7.79 | 7.77 |
| Re | 1.73 | 1.48 | 3.33 | 2.06 |
| Rw(Alpha Iron) | | 1.21 | | 3.88 |
| | | | | |
| Scale Factor | ——— | 707.0000 | ——— | 151.3100 |

\* After refinement for Alpha Iron

## Table VII

Reitveld Refined Powder X-Ray
Diffraction Data
for
Melt Spun Ribbons

| Sample | 435AB06 | 435AB06 *<br>Refined | 376AV08 | 376AV08 *<br>Refined |
|---|---|---|---|---|
| Nd(1)—x | .2641 | .2670 | .2695 | .2736 |
| Nd(1)—y | .2641 | .2670 | .2695 | .2736 |
| Nd(1)—z | 0.0000 | 0.0000 | 0.0000 | 0.0000 |
| Nd(1)—n | .2340 | .2430 | .2300 | .2400 |
| Nd(2)—x | .1380 | .1387 | .1395 | .1417 |
| Nd(2)—y | -.1380 | -.1387 | -.1395 | -.1417 |
| Nd(2)—z | 0.0000 | 0.0000 | 0.0000 | 0.0000 |
| Nd(2)—n | .2200 | .2300 | .2200 | .2300 |
| Fe(1)—x | .2250 | .2272 | .2198 | .2220 |
| Fe(1)—y | .5642 | .5641 | .5651 | .5653 |
| Fe(1)—z | .1321 | .1261 | .1366 | .1275 |
| Fe(1)—n | 1.0400 | 1.0900 | 1.0700 | 1.0500 |
| Fe(2)—x | .0422 | .0386 | .0405 | .0380 |
| Fe(2)—y | .3561 | .3582 | .3545 | .3577 |
| Fe(2)—z | .1739 | .1766 | .1739 | .1762 |
| Fe(2)—n | 1.0300 | 1.0300 | 1.1400 | 1.1100 |
| Fe(3)—x | .0969 | .1008 | .0997 | .1063 |
| Fe(3)—y | .2007 | .1008 | .0977 | .1063 |
| Fe(3)—z | .2007 | .2038 | .2038 | .2073 |
| Fe(3)—n | .4900 | .4800 | .5600 | .5000 |
| Fe(4)—x | .3168 | .3144 | .3162 | .3141 |
| Fe(4)—y | .3168 | .3144 | .3162 | .3141 |
| Fe(4)—z | .2552 | .2542 | .2585 | .2603 |
| Fe(4)—n | .5700 | .6000 | .5700 | .5300 |
| Fe(5)—x | .5000 | .5000 | .5000 | .5000 |
| Fe(5)—y | .5000 | .5000 | .5000 | .5000 |
| Fe(5)—z | .1232 | .1199 | .1209 | .1150 |
| Fe(5)—n | .2500 | .2500 | .2500 | .2300 |
| Fe(6)—x | 0.0000 | 0.0000 | 0.0000 | 0.0000 |
| Fe(6)—y | .5000 | .5000 | .5000 | .5000 |
| Fe(6)—z | 0.0000 | 0.0000 | 0.0000 | 0.0000 |
| Fe(6)—n | .2500 | .2500 | .2500 | .2500 |
| B(1) —x | .3180 | .3210 | .3220 | .3390 |
| B(1) —y | -.3180 | -.3210 | -.3220 | -.3390 |
| B(1) —z | 0.0000 | 0.0000 | 0.0000 | 0.0000 |
| B(1) —n | .3600 | .3300 | .3200 | .2800 |
| a (Angstroms) | 8.7960 | 8.7940 | 8.7980 | 8.7960 |
| c (Angstroms) | 12.1930 | 12.1920 | 12.2030 | 12.2040 |
| $R_w$ | 8.60 | 6.59 | 13.95 | 11.81 |
| $R_e$ | 3.99 | 3.98 | 3.91 | 3.38 |
| $R_p$ | 3.05 | 2.24 | 7.70 | 5.92 |
| $R_p$(Alpha Iron) | | 2.07 | | 4.82 |
| Scale Factor | ——— | 93.9600 | ——— | 74.3900 |

* After refinement for alpha iron.

EXAMPLE VIII - Sample 393AG01

Quench plus subsequent anneal.

The ingot of iron, neodymium, boron, and silicon was prepared by induction melting in a quartz crucible following the procedures described above. The ingot had an average elemental analysis, in atomic percent by EDS and WDS of:

| | |
|---|---|
| Iron | 79.1 |
| Neodymium | 10.9 |
| Boron | 6.2 |
| Silicon | 1.6 |
| Aluminium | 2.2 |

Fragments of the ingot were then placed into an individual quartz crucible, melted, and quenched to form a ribbon as described above. The quench parameters were:

| | |
|---|---|
| Crucible | 2,5cm Quartz (Tw) |
| Crucible orifice diameter | 0,8mm |
| Crucible pressurizing gas | Argon |
| Crucible discharge pressure | (3 psi) 20 kPa |
| Crucible - wheel distance | (3/8") 0,9 cm |
| Charge Size | 200 grams |
| Crucible Axis | Perpendicular |
| Shroud gas | He (10 psi) 68 kPa |
| Scraper gas | $N_2$(20 psi) 136 kPa |
| Chamber gas | $N_2$ |
| Chamber pressure (gauge) | (2 psi) 13,6 kPa |
| Wheel diameter | (20 Inches) 51 cm |
| Wheel velocity | 1100 rpm |
| Ribbon thickness | 33-40 $\mu$m |
| Ribbon width | 1,4 mm |
| Yield | 185 grams |

The following as quenched magnetic parameters were obtained using the procedures described above:

| | Field plane of ribbon parallel to spin direction | Field plane of ribbon perpendicular to spin direction | Field perpendicular to ribbon (uncorrected) | Field perpendicular to ribbon (corrected) |
|---|---|---|---|---|
| $(BH)_{max}$ | 140 | 136 | 75,6 | 126,6 (kJ/m$^3$) |
| $M_r$ | 0,96 | 0,94 | 0,72 | 0,93 (T) |
| $H_c$ | 0,78 | 0,78 | 0,75 | 0,71 (10$^3$ kA/m) |
| Q | | (uncorrected) | | ,91 |
| Q | | corrected for demagnetization, field perpendicular to ribbon | | 1,04 |

Fragments of the ribbon were analyzed by EDS and WDS. The ribbon fragments had the following elemental analysis, in atomic percent:

| | |
|---|---|
| Iron | 80.1 |
| Neodymium | 10 |
| Boron | 7.3 |
| Aluminium | 1.5 |

(continued)

| Silicon | 1.2 |
|---|---|

Other ribbons spun and quenched from this material were measured magnetically in the unpulsed condition. Pulsing the ribbons should slightly increase the valves given below.

| Energy Product (MGOe) kJ/m$^3$ | Coercive Force (kOe) 10$^3$ kA/m |
|---|---|
| 136 (17,13) | 0,80 (10,0) |
| 106 (13,3) | 0,78 (9,8) |
| 135 (17,0) | 0,76 (9,6) |

EXAMPLE IX - Sample 471 and 477 Series

The ingots were consolidated by arc melting buttons of alloy in high purity argon (99.98%). The starting materials were high quality: Fe 99.99%; Nd 99.9%; B 99.7%; and Si 99.99%. Each alloy button was remelted and inverted five times. A Zr getter (for oxygen) was used and showed no visible contamination.

Pieces of the ingot and twins of the magnetically measured melt-spun ribbons had their compositions measured by energy dispersive scanning electron microscopy. A "twin" is a fragment broken off next to the bit of magnetically measured ribbon, and is therefore assumed to have essentially the same composition and microstructure. These results are listed below:

| Examples | Fe | Nd | Si | B |
|---|---|---|---|---|
| Ingot: 471AC | 80.5 | 13.5 | 0 | 6 |
| Ingot:471AD | 79.6 | 14.4 | 0 | 6 |
| Ribbon:471AC01(3) | 79.6 | 13.2 | 1.2 | 6 |
| Ribbon:471AC01(4) | 79.5 | 13.1 | 1.4 | 6 |
| [471AC alloy picked up about 1.3 at % Si subsequent to melt-spinning] | | | | |
| Ingot:477AB | 78.2 | 14.2 | 1.6 | 6 |
| Ribbon:477AA01(5) | 77.8 | 13.9 | 2.3 | 6 |
| Ribbon:477AA01(4) | 80.6 | 10.7 | 2.7 | 6 |
| Ribbon:477AA01(1) | 76.4 | 14.1 | 3.5 | 6 |

[477AA picked up about 1.2 at % Si subsequent to melt-spinning]

Each ingot was spun under identical conditions, except for the wheel speed which had the surface speeds of 20. 25 and 30 m/sec. The conditions are listed below.

| Crucible Type | Quartz |
|---|---|
| Crucible Diameter | 17-19mm |
| Crucible Orifice Diameter | 1mm |
| Crucible Pressurizing Gas | Argon |
| Crucible Discharge Pressure | (2psi) 13,6 kPa |
| Crucible Wheel Distance | 8mm |
| Crucible Axis | Perpendicular (90°) |
| Wheel Type | Cu |
| Wheel Diameter | (10 inches) 25,4 cm |
| Wheel Smoothness | #600 Grit |
| Chamber Gas | Argon |
| Chamber Pressure | 1 Atmosphere |
| Charge Amount | 18-21 grams |
| Means of Melting | R.f. induction at 400 kHz |
| Heat Up Time | 30-50 seconds |
| Ejection Temperature | 1350°C [optical pyrometer with emissivity set at 0,55] |

(continued)

| Spin Time | 2 - 4 seconds |
|---|---|

It is important to note that the melt-spun ribbon is consistently higher in Si content that the ingot. The molten alloy acquires this Si frcm the quartz crucible. This points out the need to measure the composition at each stage of the fabrication.

The average values of the magnetic properties were obtained from 3 distinct runs wherein each consisted of 10 separate ribbon pieces stacked together. For each measurement the ribbons were magnetically pulsed three times at $9,55` 10^3$ kA/m for 1m sec. The magnetization measurements were performed in a VSM with a maximum applied field of $1.75` 10^3$ -kA/m.

| Applied field in plane of ribbon parallel to spin direction. | | | | | | |
|---|---|---|---|---|---|---|
| Sample No. | Wheel Speed m/sec | $BH_m$ (MGOe) $kJ/m^3$ | $H_c$ (kOe) $10^3$ kA/m | $M_r$ (kG) T | Ribbon Thickness μm | Ribbon Width mm |
| 471AB01 | 20 | (14,3) ±.6 114 | (16,1) ±.3 1,28 | (9,7) ±.1 0,97 | 41±16 | 1.5±.6 |
| 471AC01 | 25 | (18,6) ±1.2 148 | (12,4) ±.2 0,99 | (10,5) ±.2 1,05 | 33±8 | 1.4±.4 |
| 471AD01 | 30 | (14,7) ±1.2 117 | (16,4) ±.5 1,30 | (10,4) ±.1 1,04 | 30±8 | 1.3±.3 |
| 477AA01 | 20 | (13,0) ±1.6 103 | (17,4) ±.5 1,39 | (9,2) ±.3 0,92 | 42±7 | 1.8±.3 |
| 477AB01* | 25 | (12,3) ±1.3 98 | (16,9) ±.6 1,34 | (9,2) ±.1 0,92 | | |
| 477AD01 | 25 | (15,2) ±2.7 121 | (17,9) ±.8 1,42 | (9,2) ±.4 0,92 | 37±11 | 1.5±.4 |
| 477AC01 | 30 | (11,6) ±1.6 92,3 | (16,3) ±.6 1,30 | (10,1) ±.2 1,01 | 35±11 | 1.7±.8 |

*During this melt-spinning run the orifice became obstructed and clogged.

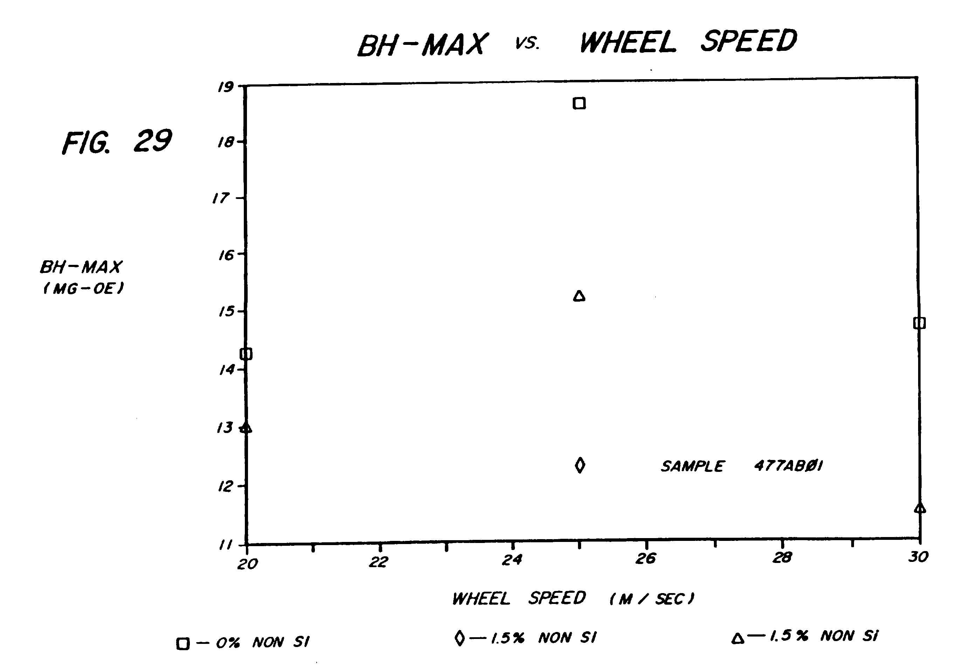

The data above and the Figure 29 exhibits a peak in the energy product with respect to wheel surface speed. The optimal wheel velocity is 25m/s for a 25 cm diameter wheel.

| Correlation between Microstructure and Magnetic Properties | | | | |
|---|---|---|---|---|
| Sample No. | $BH_m$ [MGOe] $kJ/m^3$ | $H_c$ [kOe] $10^3$kA/m | $M_r$ [kG] T | Microstructure |
| 471AC01(3) | (25,3) 201 | (12,7) 1,01 | (11,0) 1,1 | Only homogeneous fine |
| 477AA01(5) | (21,8) 174 | (17,7) 1,41 | (10,3) 1,03 | grain morphology |
| 471AD01(4) | (11,5) 91,5 | (15,2) 1,21 | (9,0) 0,9 | Consists of small and |
| 477AA01(3) | (6,5) 52 | (11,1) 0,88 | (8,5) 0,85 | large grain regions |

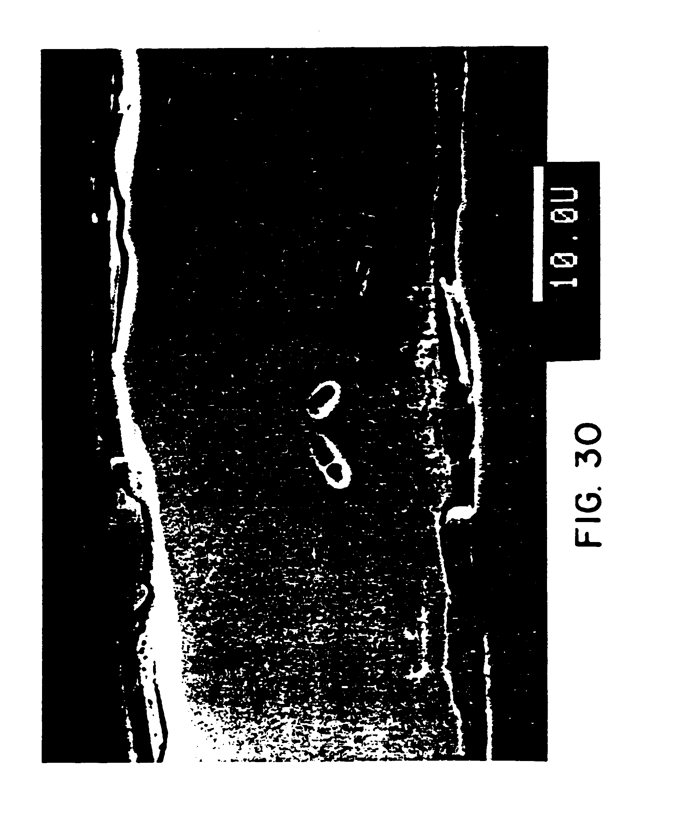

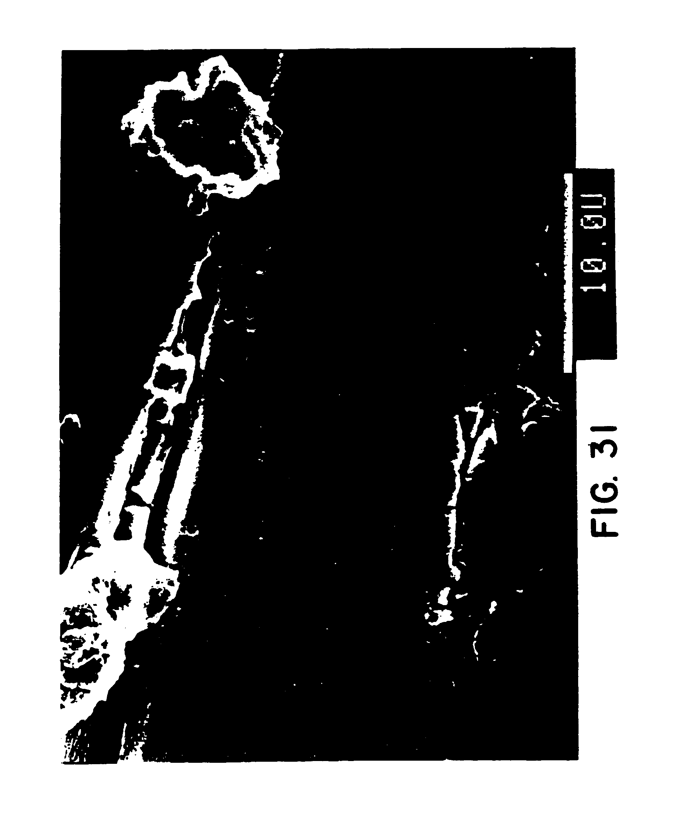

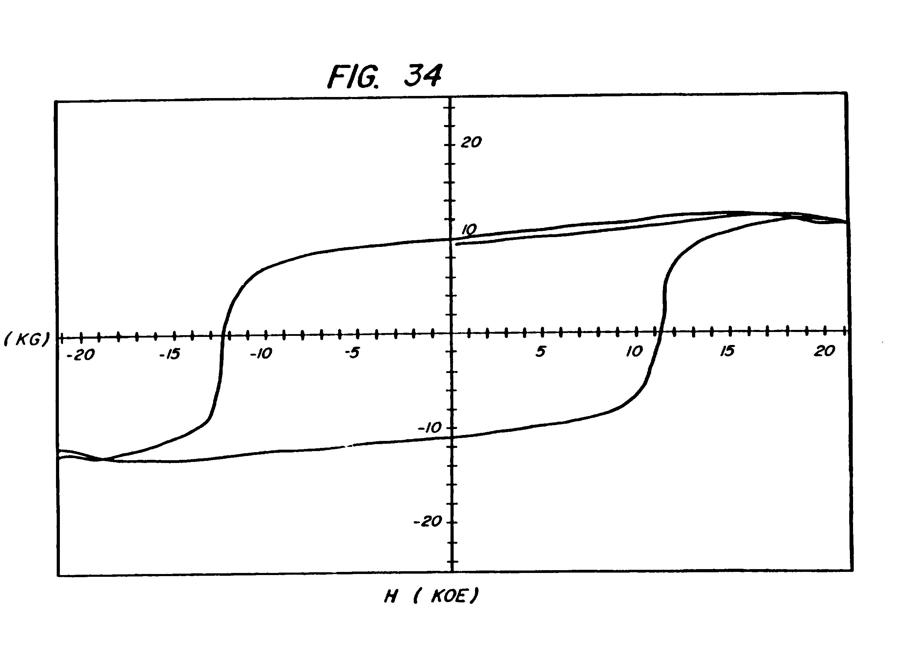

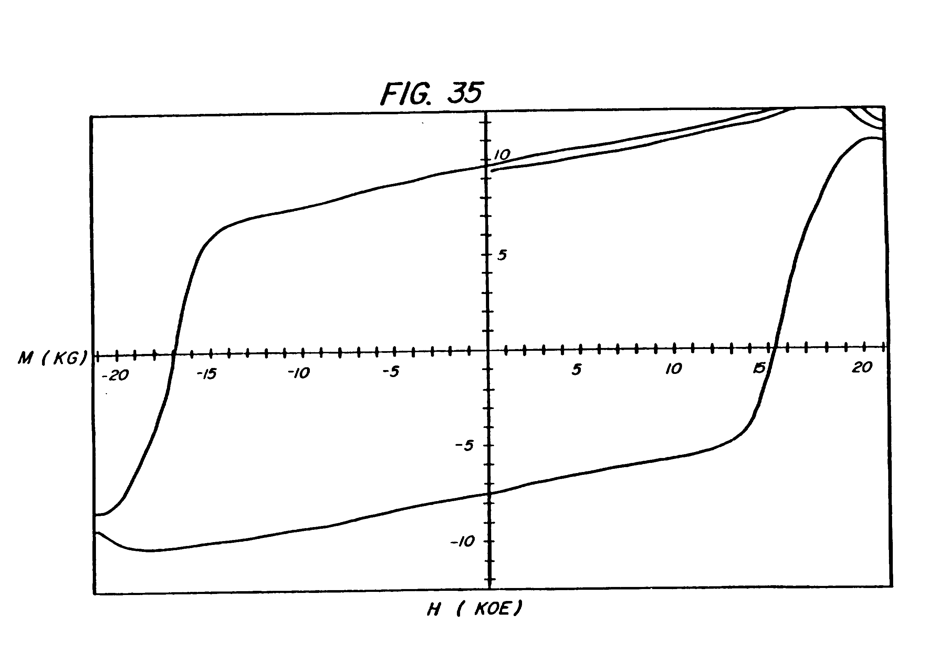

The fine grain region (located on the wheel side of the melt-spin ribbon) was not resolved by polishing and etching, e.g., in 1 to 2 percent nitric acid in ethanol, but was determined to be less than 200 nm. See Figures 30 and 31. This fine grain region is identified to be the good magnetic material, i.e., having a high energy product and high remanent magnetization. See the table above and the magnetization curves for 471AC01(3) and 477AA01(5). The SEM photos are the cross sections of the appropriate twins. See Figures 34 and 35.

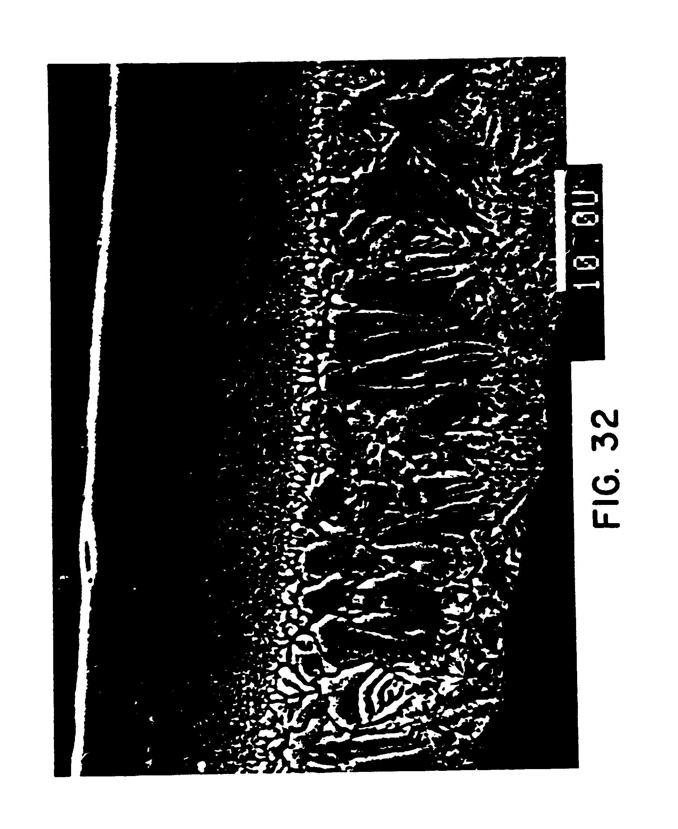

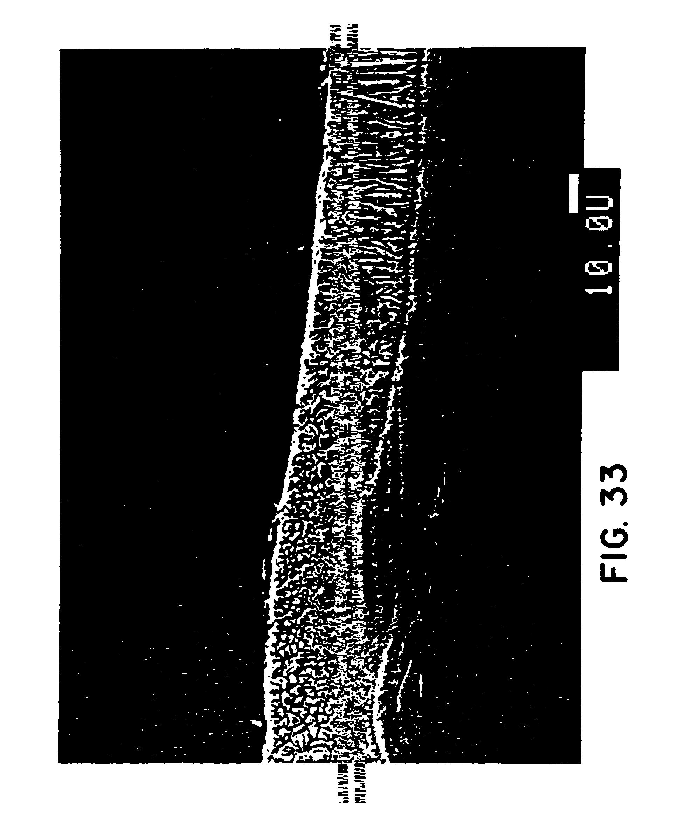

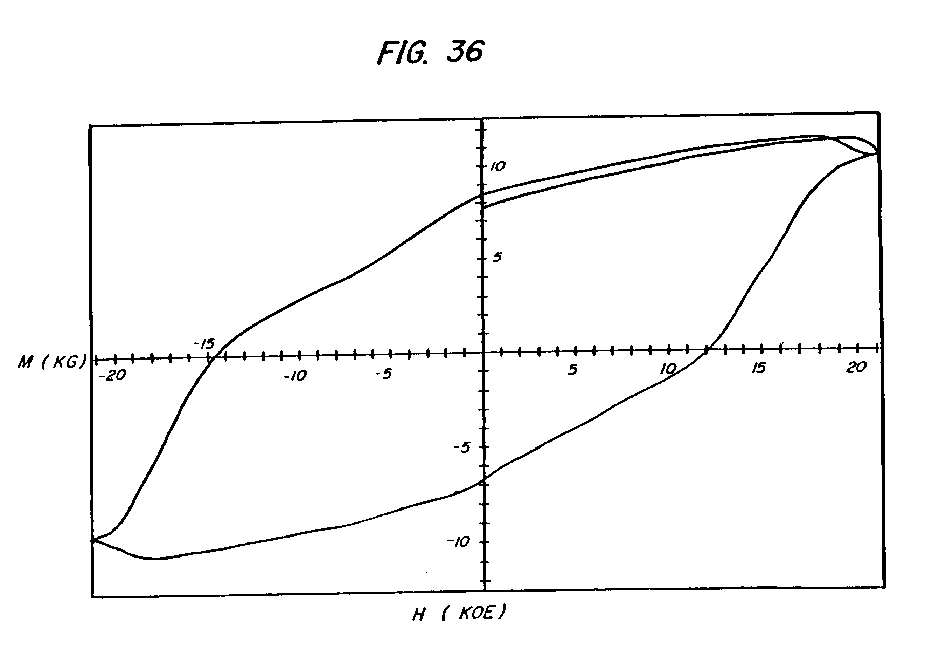

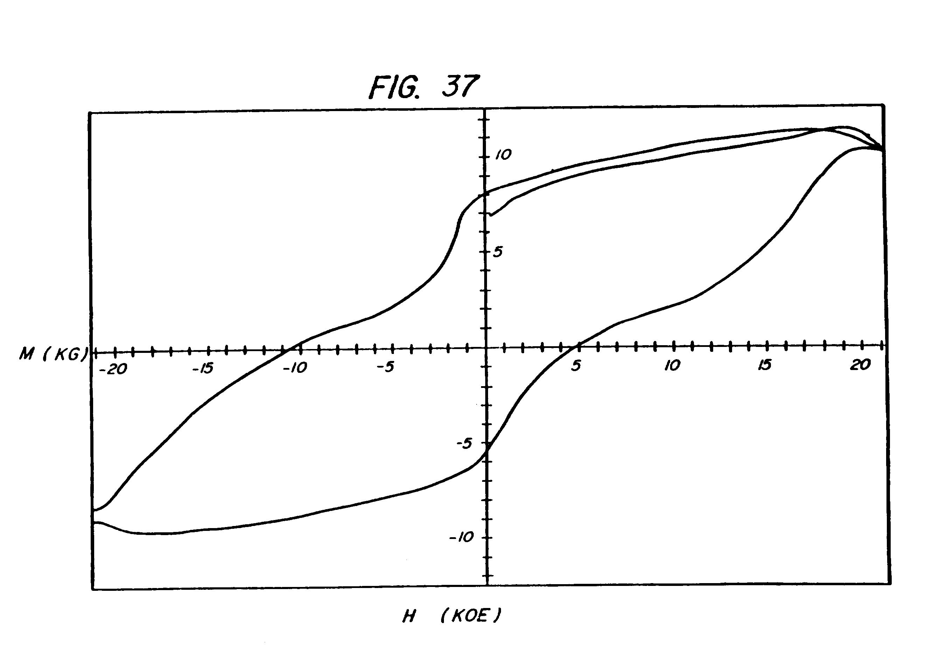

The other two samples exhibit a superposition of the good and inferior magnetic material (the latter being identified with the large grain zone found on the free side of the ribbon, see the SEM photos) as shown in the magnetization curves. See Figures 32, 33, 36 and 37.

Preliminary analysis using a high resultion scanning transmission electron microscope (STEM) has been carried out on a magnetic ribbon fragment which is a "twin" of sample #477AD01(1) whose quench parameters and magnetic performance were reported above.

The ribbon sample was mounted using standard micrometallographic techniques, and an ion-beam etcher was used to thin part of the sample down to about one thousand angstroms. Observations were made on the two ribbon surfaces (after argon ion etching away the top half micron), the wheel side and the free side.

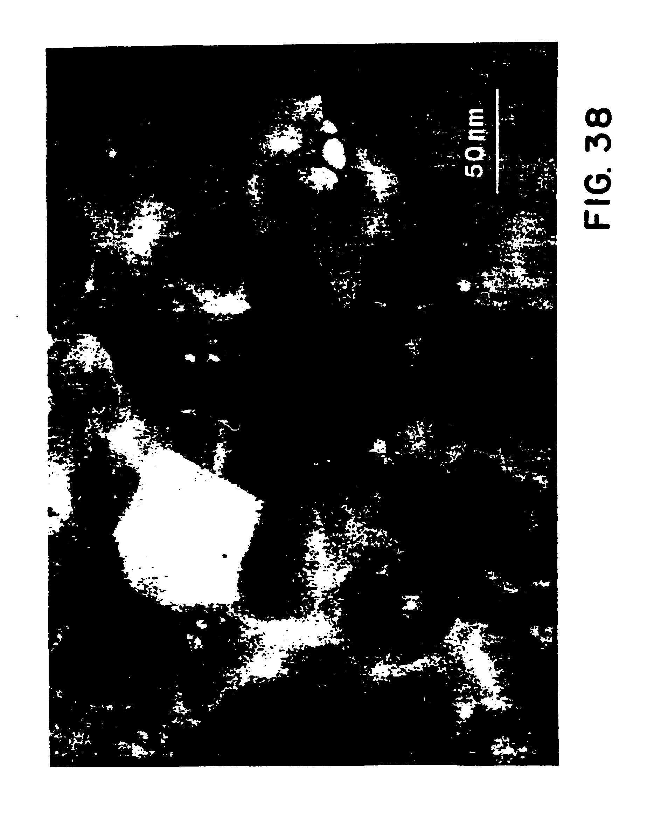

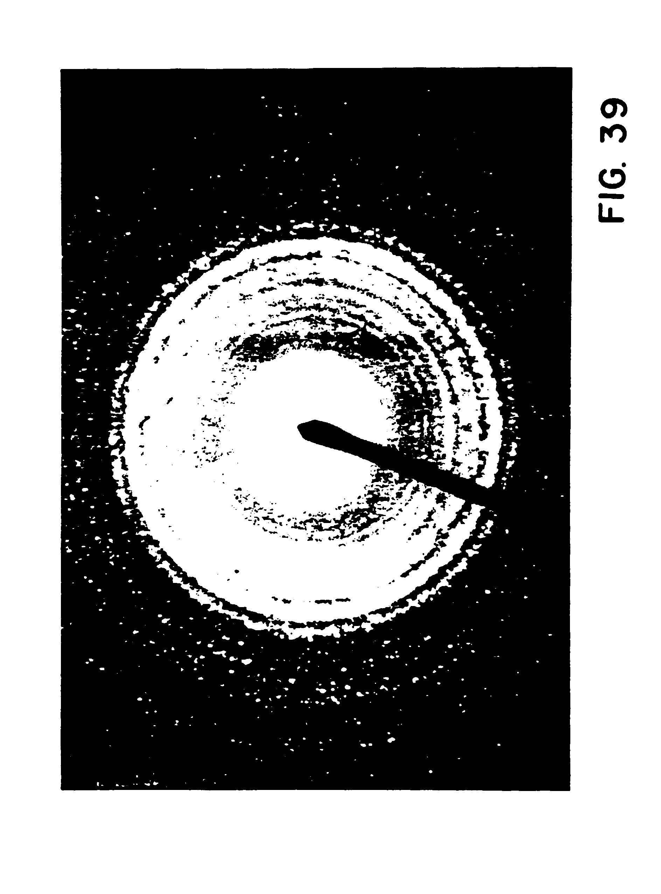

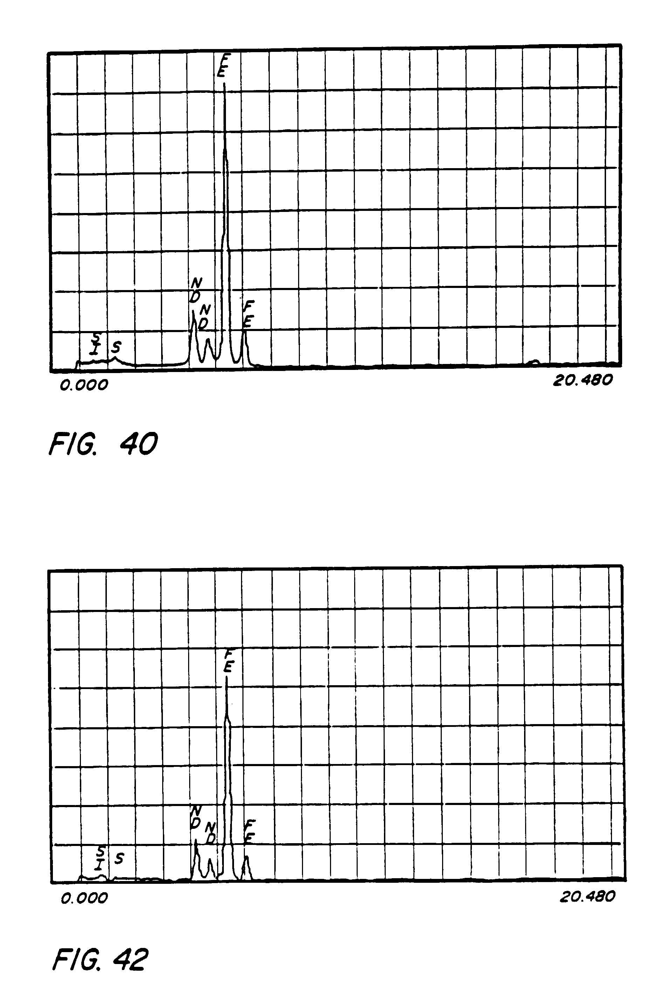

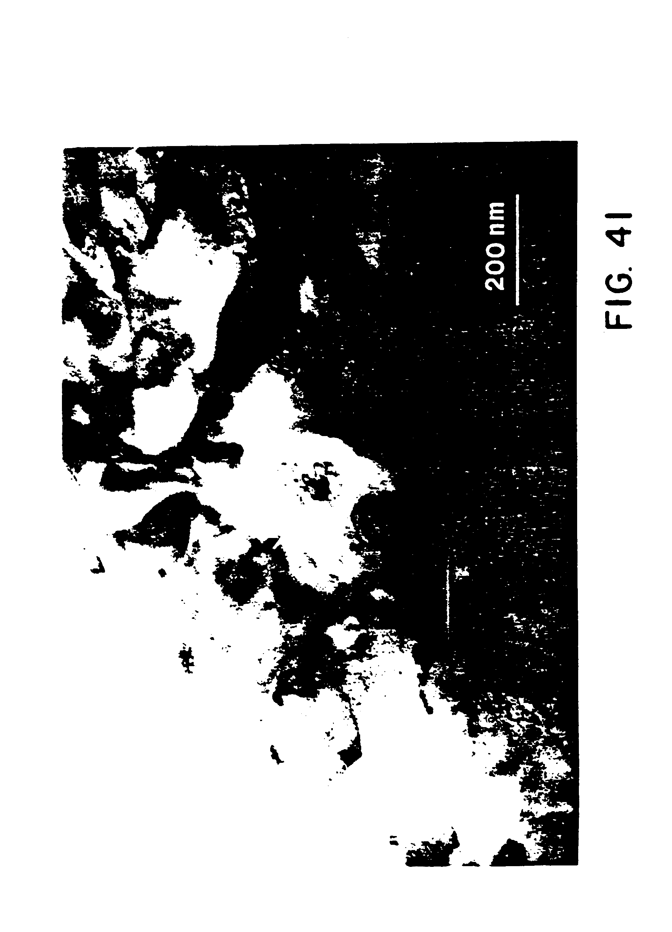

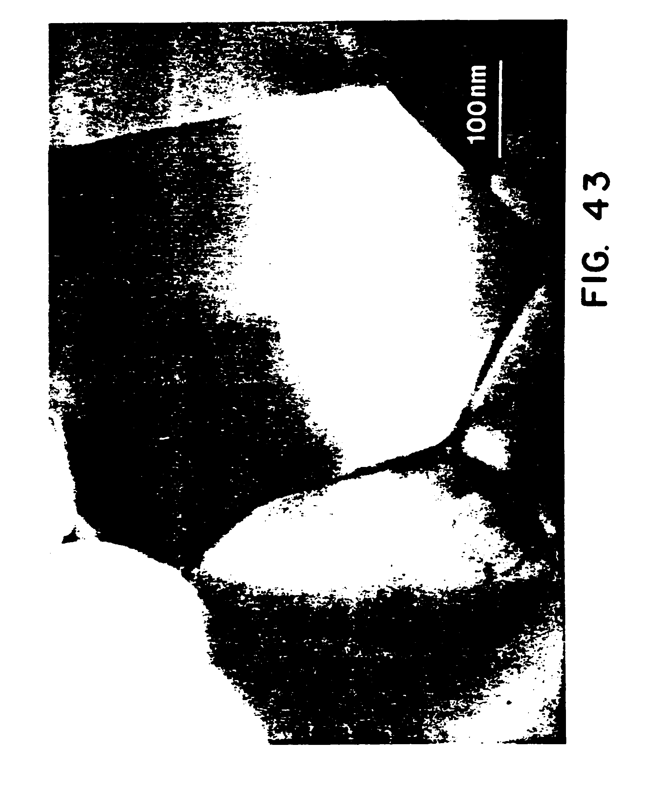

The microstructure on the wheel side consisted primarily of very small equiaxed grains of the main tetragonal phase (with rare-earth to iron ratio consistent with $Nd_2Fe_{14}B$), with grain sizes in the range from 10 to 100 nm, that were found by electron diffraction to be randomly oriented. See Figures 38 through 40 There was also a small fraction of grains of alpha-iron, of typical size 50 nm or more. On the boundaries between the larger grains of the main tetragonal phase, there was some evidence of an additional phase or phases present as pherical inclusions relatively richer in Neodymium and Sulfur than the main phase. See Figures 41 and 42. Sulfur was not previously believed to be a constituent of the materials. The location of the Si remained difficult to determine.

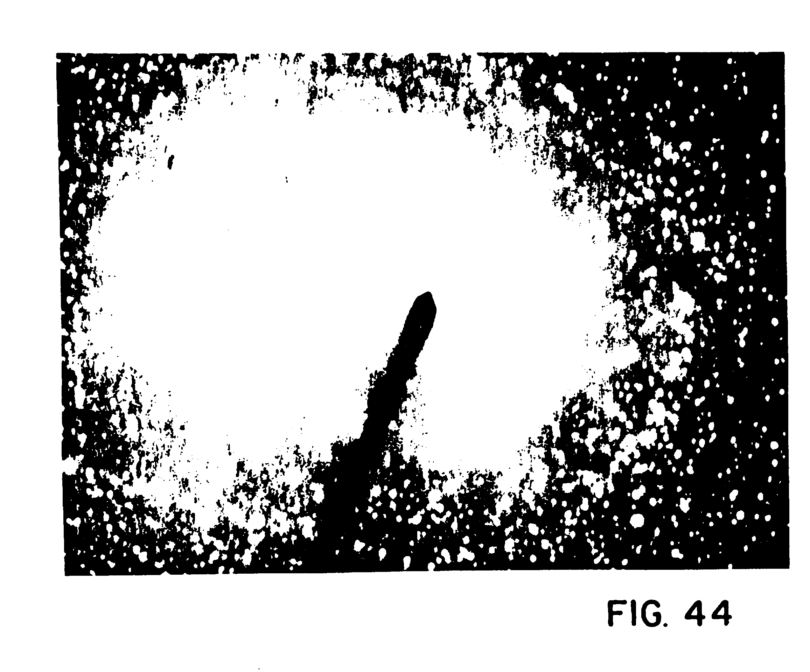

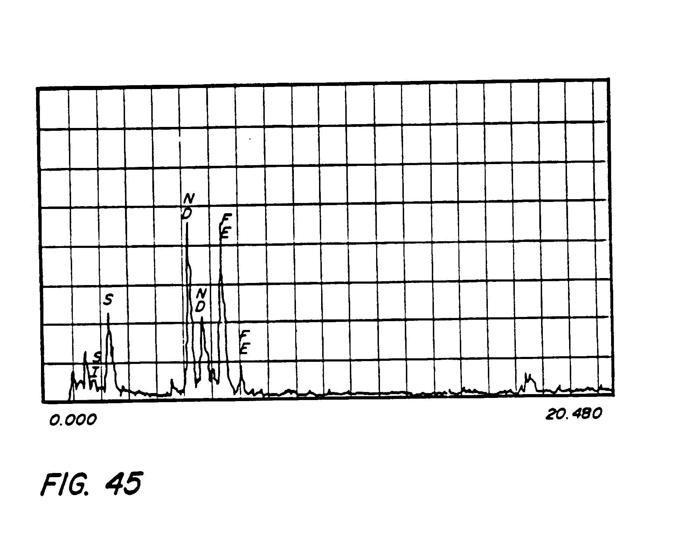

On the free side of the ribbon, the grains of the main phase were much larger, with diameters up to approximately a micron. See Figures 43 through 45. Somewhat more silicon was present on the free side than on the wheel side, although again its precise location within the microstructure was not apparent.

EXAMPLE X - Sample 376AQ09(2)

An ingot of iron, neodymioum, boron. and silicon was prepared following the procedures described for above. The ingot had an average elemental analysis. in atomic percent, by EDS and WDS of:

| | |
|---|---|
| Iron | 78.2 |
| Neodymium | 12.5 |
| Boron | 8 |
| Silicon | 1.3 |

Fragments of the ingot were then placed into an individual quartz crucible, melted, and quenched to form a ribbon as described above. The quench parameters were:

| | |
|---|---|
| Crucible | 1,9 cm (3/4") Quartz |
| Crucible orifice diameter | 0,92mm |
| Crucible pressurizing gas | Argon |
| Crucible discharge pressure | 34 kPa |
| Crucible - wheel distance | 0,31 cm |
| Charge Size | 40 grams |
| Crucible Axis | Perpendicular |
| Shroud gas | He 68 kPa |
| Scraper gas | Ar 102 kPa |
| Chamber gas | $N_2$ |
| Chamber pressure (gauge) | 0 kPa |
| Wheel diameter | 50 cm |
| Wheel velocity | 1200 rpm |
| Wheel smoothness | 240 grit |
| Ribbon thickness | 15-20 -μm |
| Ribbon width | 1,8 mm |
| Yield | 32 grams |

Magnetic measurements of the resultant as quenched ribbon showed it to have a low $BH_{max}$ of 7.96 - 15.92 kJ/$m^3$ (1 - 2 MGOe) and a low coercive force of 1 to 3 KOe. The magnetic alloy material as quenched is believed to be substantially isotropic.

Ribbons from the product were wrapped in tantalum foil and sealed under Argon in quartz. After a six hour anneal at 650° C, the following magnetic parameters were obtained using the procedures described above:

|  | Field plane of ribbon parallel to spin direction | Field plane of ribbon perpendicular to spin direction | Field perpendicular to ribbon (uncorrected) | Field perpendicular to ribbon (corrected) |
|---|---|---|---|---|
| $(BH)_m$ | 148 | 126 | 99 | 146 kJ/m$^3$ |
| $M_r$ | 0,96 | 0,88 | 0,79 | 0,97 T |
| $H_c$ | 1,08 | 1,13 | 0,96 | 0,96 10$^3$ kA/m |
| Q | (uncorrected) | | | .91 |
| Q | corrected for demagnetization, field perpendicular to ribbon | | | 1.03 |

Other ribbons from this material had the following parameters:

| Energy Product (MGOe) kJ/m$^3$ | Coercive Force (kOe)·10$^3$ kA/m |
|---|---|
| 150 (18,8) | 0,78 (9,8) |
| 129 (16,2) | 1,09 (13,7) |

From these results it is clear that an alternate route to obtaining material with Q greater than 1 is to quench from the melt to a precursor structure which is converted to the appropriate structure for enhanced magnetic properties by appropriate heat treating. The example given here has not been optimized for maximum magnetic properties in the final product.

EXAMPLE XI - Sample 469AA12(1)

The ingot of iron, praseodymium, neodymium, boron, and silicon was prepared following the procedures described for above. The ingot had an average elemental analysis, in atomic percent by EDS and WDS of:

| Iron | 75.4 |
|---|---|
| Neodymium | 15.1 |
| Boron | .5 |
| Silicon | 6.3 |
| Aluminium | 2.7 |

Fragments of the ingot were then placed into an individual quartz crucible, melted, and quenched to form a ribbon as described above. The quench parameters were:

| Crucible | 5 cm Quartz (Tw) |
|---|---|
| Crucible orifice diameter | 0,65mm |
| Crucible pressurizing gas | Argon |
| Crucible discharge pressure | 13,6 kPa |
| Crucible - wheel distance | 5 mm |
| Charge Size | 500 grams |
| Crucible Axis | Perpendicular |
| Chamber gas | Argon |
| Chamber pressure (gauge) | -6 in Hg |
| Wheel diameter | 30,5 cm |
| Wheel velocity | 900 rpm |
| Wheel Smoothness | 600 grit |
| Ribbon thickness | 35-62 μm ± 6,35 |
| Ribbon width | 1,49 mm |

(continued)

| | ±,349 |
|---|---|
| Yield | 375 grams |

The following as quenched magnetic parameters were obtained using the procedures described above:

| | Field plane of ribbon parallel to spin direction | Field plane of ribbon perpendicular to spin direction | Field perpendicular to ribbon (uncorrected) | Field perpendicular to ribbon (corrected) |
|---|---|---|---|---|
| $BH_{max}$ | 251 | 170 | 152 | 205 kJ/m$^3$ |
| $M_r$ | 1,22 | 1 | 0,96 | 1,11 T |
| $H_c$ | 1,75 | 1,75 | 1,70 | 1,70·10$^3$ kA/m |
| Q | | (uncorrected) | | 1.33 |
| Q | | corrected for demagnetization, field perpendicular to ribbon | | 1.45 |

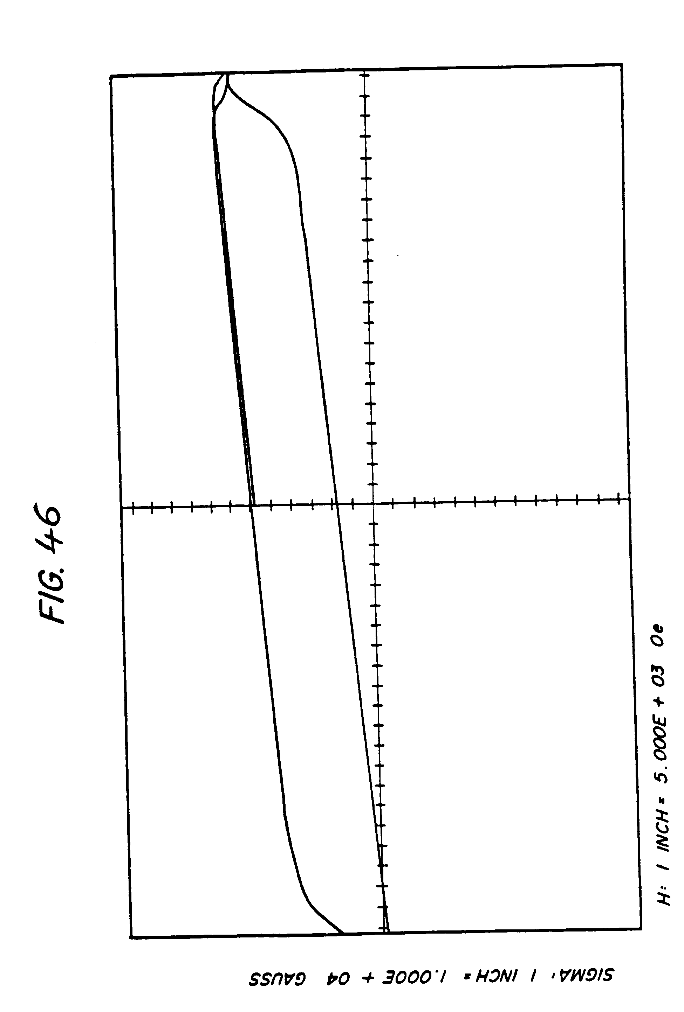

The M vs curve for fragments of this ribbon is shown in Figure 8 (of Ex.V) of U.S. Appl. No. 801996. Fig. 46 herein. Fragments of the ribbon were analyzed by EDS and WDS. The ribbon fragments had the following elemental analysis, in atomic percent:

| | |
|---|---|
| Iron | 75.99 |
| Neodynium | 14.78 |
| Boron | 6.64 |
| Silicon | 2.58 |

Other ribbons spun and quenched from this material had the following parameters:

| Energy Product kJ/m$^3$(MGOe) | Coercive Force 10$^3$ kA/m (kOe) |
|---|---|
| 194 (24,4) | >1,75 (22) |
| 132 (16,6) | 1,5 (18,8) |

These materials exemplify the problem in correctly measuring these high coercive force materials. When the ribbon which was checked for isotropy was measured of 180° from the initial direction of magnetization the value of the $BH_{max}$ was reduced from 243 to 213 kJ/m$^3$ remeasuring in the original direction yielded 31.6. Since the two directions of measurement are crystallographically equivalent, this difference can only be due to a failure to completely saturate the material in the reverse direction since the material was magnetized with nominally identical 12T pulses in each direction this indicated that once magnetized the field required to reverse the magnetization is greater than the field required to produce the magnetization initially. Practically, this results in a "training" phenomenon, where the initial direction of magnetization becomes a preferred direction in the material.

EXAMPLE XII - Sample 435AA03 (S715 and S735)

Bonded Sample Compacts

The bonded sample compacts were made from material known as 435AA and 435AA03. S715 and S735 describes the identical sample to those described in Example I and II in U.S. Application Serial Number 705,263, of which the present application is a continuation-in-part.

An ingot of iron, praseodymium, neodymium, and silicon was prepared following the procedures described above. The ingot had an average elemental analysis, in atomic percent. by EDS and WDS of:

| | |
|---|---|
| Iron | 79.25 |
| Neodymium | 12.05 |
| Boron | 7.15 |

(continued)

| Silicon | 1.45 |
|---------|------|

Fragments of the ingot were then placed into an individual quartz crucible, melted, and quenched to form a ribbon as described above. The quench parameters were:

| | |
|---|---|
| Crucible | 1,9 cm Quartz |
| Crucible orifice diameter | 0,8mm |
| Crucible pressurizing gas | Argon |
| Crucible discharge pressure | 27 kPa |
| Crucible - wheel distance | 0,95cm |
| Charge Size | 40 grams |
| Crucible Axis | Perpendicular |
| Chamber gas | $N_2$ |
| Chamber pressure (gauge) | 13,6 kPa |
| Wheel diameter | 20 Inches |
| Wheel velocity | 1000 rpm |
| Wheel Smoothness | 240 grit |
| Ribbon thickness | 38-48 $\mu$m |
| Ribbon width | 1,8 mm |
| Yield | 33 grams |

Sample S715 was produced as described above for cold pressing and adhesive impregnation, using a tungsten carbide die in an hydraulic press and commercially available LOC-TITE (TM) 709 adhesive. Samples S735 was produced by cold pressing without adhesive using a steel die.

The results below have been measured pre-magnetized along the pellet axis and demagnetization factor of .25 applied. The results are shown below.

| Samples | S715 | S735 |
|---------|------|------|
| Pressure (psi) | (180) 1224 | (400) 2720 kPa |
| Density (g/cc) | 5,9 | 6,9 |
| Remanence(kG) | (7,2) 0,72 | (9,0) 0,9 T |
| $H_c$ (kOe) | (10,6) 0,84 | (10,9) 0,87 $10^3$.KA/m |
| Energy Product (MGOe) | (11,5) 92 | (13,8) 110 kJ/m$^3$ |

The following as quenched magentic parameters were obtained using the procedures described above for a ribbon magnet sample of 435AA03[1].

| | 1A | 1B | 2B | 3B |
|---|---|---|---|---|
| | Field plane of ribbon parallel to spin direction | Field plane of ribbon perpendicular to spin direction | Field perpendicular to ribbon (uncorrected) | Field perpendicular to ribbon (corrected) |
| MGOe | 177 | 157 | 84 | 135 kJ/m$^3$ |
| (kG) | 1,05 | 0,976 | 0,748 | 0,923 T |
| (kOe) | 0,9 | 0,89 | 0,82 | 0,82 $10^3$. kA/m |
| | Q | (uncorrected) | | 1.0207 |
| | Q | (corrected for demagnetization, field perpendicular to ribbon) | | 1.135 |

If the magnetic properties of the compacted bodies above are normalized to full density of the magnetic alloy material (we have been using the value 7.4 g/cc), they exhibit parameters that are within the range of the as-quenched ribbons of the present invention, e.g. energy product greater than 15 MGOe and remanence greater than 716 kA/m. The magnetic properties of these compacted bodies are isotropic, so that they also to exhibit values of the magnetic retention parameter greater than 1.0.

EXAMPLE XIII- Sample ROC RO2 From 469AA Material

Due to the large amount of material required for the ROC process several runs were combined in order to check the feasibility of the compaction method. Ribbons spun and quenched from this run had typical magnetic parameters of about 62 kJ/m$^3$ for the maximum magnetic energy product and a coercive of about 955 kA/m. These were not optimized as-quenched materials.

Compaction of ribbon fragments into magnetic bodies by the technique of Rapid Omnidirectional Compaction (ROC) was performed by the process as described above using mild steel as the fluid die. For the example shown herein the steel fluid die (0.8" in diameter by 1.875" in length) in which the ribbon fragments (sieved to provide a distribution of fragments from 50 to 250 μm in size) had been placed was heated to approximately 750C, then pressed. After pressing the fluid die was quenched in a water bath. The resulting compacted material was cut from a central section of the fluid die and measured for density and magnetic properties. The density of this sample was measured by the archimedes technique to be 7.48 gm/cc (greater than 98% of theoretical x-ray density of 7.6 gm/cc). The magnetic properties of this material have not been optimized. An appropriately spun material should be chosen so that any influences of heating on the magnetic properties which occur during the consolidation process will cause the performance to be improved.

Magnetic measurements were made on one small cubic piece cut out of this compacted body. The results, using a demagnetizing coefficient N = 0.5 for each of two directions (parallel (z) and perpendicular (x) to the axis of the body) are presented below The x and y directions are assumed to be identical.

|  | x (corrected) | y (corrected) | z (corrected) |
|---|---|---|---|
| (MGOe) | (10,25) 81 | (10,25) 81 | (7,213) 57 kJ/m$^3$ |
| (kG) | (7,198) 0,7 | (7,198) 0,7 | (6,047) 0,6 T |
| (kOe) | (11,49) 0,91 | (11,49) 0,91 | (11,14) 0,88 ·10$^3$ kA/m |

Note that in this non-optimized process the magnetic properties have not degraded, and in fact appear to have increased. It is believed that further optimization will yield a compacted fully dense - body with magnetic properties comparable to magnetic alloy materials of the invention with $BH_{max}$ greater than 119 kJ/m$^3$ and Q greater than 1.0.

EXAMPLE XIV - Calendaring Process from 465AA

An extrusion process, known as calendaring was used to produce plate like magnetic sheet where the magnetic material is embedded in a polymeric binder. Powders made by the procedure described alone were combined to form a substantial lot of material, about 2.2kg. The lot consisted of selected ribbon samples made from 465AA which was prepared as described below.

An ingot of iron, praseodymium, neodymium, boron, and silicon was prepared following the procedures described above. The ingot had an average elemental analysis, in atomic percent, by EDS and WDS of:

| Iron | 74.5 |
|---|---|
| Neodymium | 14.0 |
| Boron | 10.7 |
| Silicon | .8 |

Fragments of the ingot were then placed into an individual quartz crucible, melted, and quenched to form a ribbon 465AA02. The quench parameters were:

| Crucible | Quartz |
|---|---|
| Crucible orifice diameter | 0,92mm |
| Crucible pressurizing gas | Argon |
| Crucible discharge pressure | 13,6 kPa |
| Crucible - wheel distance | 5mm |

(continued)

| Charge Size | 507 grams |
|---|---|
| Crucible Axis | 1 |
| Chamber gas | Argon |
| Chamber pressure (gauge) | -8 in Hg |
| Wheel diameter | 30,5 cm |
| Wheel velocity | 1320 rpm |
| Wheel Smoothness | 600 grit |
| Ribbon thickness | 56,2 µm |
| | 8,6 |
| Ribbon width | 2,63 mm |
| | ±,61mm |
| Yield | 257 grams |

Fragments of ribbon were analyzed by EDS and WDS. The ribbon fragment had the following elemental analysis, in atomic percent:

| Iron | 75.0 |
|---|---|
| Neodymium | 13.6 |
| Boron | 10.4 |
| Silicon | 1.0 |

The weighted average magnetic energy product of the ribbon was about 15.8 MGOe with a coercive force of about 18.5 kOe.

The resultant ribbon fragment were then extruded in a polymeric binder in a sheet form. The magnetic properties of cube shaped samples were measured. The values reported below are corrected for demagnetization effects and normalized to 100% density of magnetic material.

| | Field in x direction | Field in y direction | Field in z direction |
|---|---|---|---|
| $BH_{max}$ | 15.3 MGOe | 15.6 | 15.0 |
| $M_r$ | 9.6 kG | 10.0 | 9.9 |
| $H_c$ | 18.4 kOe | 18.9 | 18.5 |
| Q=1.129 | | | |

The density of magnetic material is the final product was 70 volume %. This example clearly demonstrates that a bonded magnetic may be made from the ribbon of the present invention without loss of properties.

While the invention has been described with respect to certain preferred exemplifications and embodiments, it is not intended to limit the scope of the invention thereby but solely by the claims appended hereto.

## Claims

1. Hard magnetic alloy of the RE TM B-type wherein RE means at least one rare earth metal chosen from the group of neodymium and praseodymium optionally with other lanthanides, TM means at least one transition metal chosen from the group of iron, cobalt and nickel and B means boron and at least silicon as a modifier and optionally a combination of silicon with aluminum, lithium, hydrogen, fluorine, phosphorous, sulfur, germanium and/or carbon as further modifiers, comprising very small grains of a tetragonal structure having grain sizes in the range of between 10 and 100 nm,
**characterized in that**
it consists of magnetically substantially isotropic particles of grains of mainly the tetragonal $RE_2 Fe_{14}$ B-type phase with other phases being present below the level of detection of x-ray diffraction, said phase having a maximum magnetic energy product greater than 119,4 $kJ/m^3$ (15MGOe) in all directions.

2. The magnetic alloy of claim 1,

**characterized in**
that the rare earth - transition metal - boron type phase having a tetragonal structure has a $P4_2/mnm$ space group.

3. The magnetic alloy of claim 1 or 2,
   **characterized in**
   that the rare earth metal - transition metal - boron type phase having a tetragonal structure has stoichiometry represented by:

$$(Fe,Co,Ni)_a(Nd,Pr)_b B_c(Si,Al)_d$$

where a is from 75 to 80, b is from 10 to 14, c is from 5 to 10, and d is from 0.5 to 5,0.

4. The magnetic alloy of one of the preceding claims,
   **characterized in**
   that the transition metal is iron, and the rare earth metal transition metal - boron type phase having a tetragonal structure has the stoichiometry represented by:

$$Fe_a(Nd,Pr)_b B_c(Si,Al)_d$$

where a is from 75 to 80, b is from 10 to 14, c is from 5 to 10, and d is from 0,5 to 5,0.

5. The magnetic alloy of claim 4,
   **characterized in**
   that the boron site occupancies and lattice parameters, normalized to Fe(6), exhibit a shift with respect to the boron site occupancies and lattice parameters in the $RE_2Fe_{14}B_1$ lattice.

6. The magnetic alloy of one of the preceding claims,
   **characterized in**
   that the alloy has a coercivity at room temperature greater than 8 kilooersteds (1 kOe = 79,6 kA/m).

7. The magnetic alloy of one of the preceding claims,
   **characterized in**
   that the alloy has a remanence greater than 9 kilogauss (1 G = $10^{-4}$ T).

8. The magnetic alloy of one of the preceding claims,
   **characterized by**
   an isotropic magnetic retention parameter (Q) greater than 1,0.

9. The magnetic alloy of one of the preceding claims,
   **characterized by**
   an isotropic coercivity at room temperature greater than 8,0 kilooersteds (1 kOe = 79,6 kA/m).

10. The magnetic alloy of one of the preceding claims.
    **characterized by**
    an isotropic remanence greater than 9,0 kilogauss (1 G = $10^{-4}$T).

**Patentansprüche**

1. Hartmagnetische Legierung des Typs RE-TM-B, bei der RE mindestens ein Seltenerdmetall aus der Gruppe Neodym und Praseodym mit gegebenenfalls anderen Lanthaniden, TM mindestens ein Übergangsmetall aus der Gruppe Eisen, Kobalt und Nickel und
   B Bor bedeuten und
   mit mindestens Silizium als Modifizierer und
   gegebenenfalls einer Kombination von Silizium mit Aluminium, Lithium, Wasserstoff, Fluor, Phosphor, Schwefel, Germanium und/oder Kohlenstoff als weitere Modifizierer,

welche sehr kleine Körner einer tetragonalen Struktur mit Korngrößen im Bereich zwischen 10 und 100 nm aufweist,

**dadurch gekennzeichnet,**

daß sie magnetisch im wesentlichen aus isotropen Teilchen von Körnern mit im wesentlichen tetragonaler Phase des $RE_2Fe_{14}B$-Typs, mit anderen Phasen unterhalb des Detektionsniveaus der Röntgendiffraktion (X-Strahlen-Diffraktion) besteht, bei der diese Phase ein maximales magnetisches Energieprodukt von mehr als 119,4 kJ/m$^3$ (15 MGOe) in allen Richtungen aufweist.

2. Legierung nach Anspruch 1,
   **dadurch gekennzeichnet,**
   daß die RE-TM-B-Phase mit tetragonaler Struktur eine P4$_2$/mnm Raumgruppe aufweist.

3. Legierung nach Anspruch 1 oder 2,
   **dadurch gekennzeichnet**,
   daß die Phase des RE-TM-B-Typs mit tetragonaler Struktur eine durch folgende Verhältnisse gebildete Stöchiometrie aufweist:

$$(Fe, Co, Ni)_a(Nd, Pr)_b B_c (Si, Al)_d$$

mit folgenden Werten:

   a = 75-80
   b = 10-14
   c = 5-10
   d = 0,5-5,0

4. Legierung nach einem der vorhergehenden Ansprüche,
   **dadurch gekennzeichnet,**
   daß als Übergangsmetall Eisen verwendet ist und daß die Phase des RE-TM-B-Typs mit tetragonaler Struktur eine durch folgende Verhältnisse gebildete Stöchiometrie aufweist:

$$Fe_a(Nd, Pr)_b B_c (Si, Al)_d$$

dabei sind:

   a = 75-80
   b = 10-14
   c = 5-10
   d = 0,5-5,0

5. Legierung nach Anspruch 4,
   **dadurch gekennzeichnet,**
   daß die Bor-Stellen und Gitterparameter, auf Fe (6) normiert, eine Verschiebung in Bezug zu den Bor-Stellen und Gitterparametern im $RE_2Fe_{14}B_1$-Gitter aufweisen.

6. Legierung nach einem der vorhergehenden Ansprüche,
   **dadurch gekennzeichnet**,
   daß sie eine Koerzitivkraft bei Raumtemperatur von mehr als 8 kOe aufweist (1kOe = 79.6 kA/m).

7. Legierung nach einem der vorhergehenden Ansprüche,
   **dadurch gekennzeichnet,**
   daß sie eine Remanenz von mehr als 9 kG aufweist (lG = 10$^{-4}$T).

8. Legierung nach einem der vorhergehenden Ansprüche,
   **dadurch gekennzeichnet,**
   daß sie einen isotropischen magnetischen Retentionsparameter (6) von mehr als 1,0 aufweist.

**9.** Legierung nach einem der vorhergehenden Ansprüche,
**dadurch gekennzeichnet,**
daß die isotrope Koerzitivkraft bei Raumtemperatur größer als 8,0 kOe ist (1 kOe = 79,6 kA/m).

**10.** Legierung nach einem der vorhergehenden Ansprüche,
**dadurch gekennzeichnet,**
daß die isotrope Remanenz größer als 9,0 kG ist (1G = $10^{-4}$T).

**Revendications**

1. Alliage magnétique dur du type RE-TM-B, dans lequel RE désigne au moins un métal des terres rares choisi parmi le noédyme et le praséodyme avec si on le désire d'autres lanthanides, TM désigne au moins un métal de transition choisi parmi le fer, le cobalt et le nickel et B désigne le bore et au moins du silicium comme modificateur et si on le désire une combinaison de silicium et d'aluminium, de lithium, d'hydrogène, de fluor, de phosphore, de soufre, de germanium et / ou de carbone comme modificateurs supplémentaires, comprenant de très petits grains de structure quadratique ayant des phases de grain comprises dans l'intervalle entre 10 et 100nm, caractérisé en ce qu'il se compose de particules pratiquement isotropes du point de vue magnétique de grains qui sont principalement en phase tetragone du type $RE_2 Fe_{14} B$, d'autres phases étant présentes au-dessous du taux de détection de la diffraction des rayons X, ladite phase ayant un produit d'énergie magnétique maximum supérieur à 119,4 $KJ/m^3$ (15 MGOe) dans toutes les directions.

2. Alliage magnétique selon la revendication 1, caractérisé en ce que la phase du type terre rare-métal de transition-bore ayant une structure quadratique a un groupe spatial $P4_2/mnm$.

3. Alliage magnétique selon la revendication 1 ou 2, caractérisé en ce que la phase du type métal des terres rares-métal de transition-bore ayant une structure quadratique a une stoechiométrie représentée par

$$(Fe,Co,Ni)_a(Nd, Pr)_b B_c (Si, Al)_d$$

dans laquelle a est de 75 à 80. b est de 10 à 14, c est de 5 à 10 et d est de 0,5 à 5,0.

4. Alliage magnétique selon l'une des revendications précédentes, caractérisé en ce que le métal de transition est le fer, et en ce que la phase du type métal des terres rares-métal de transition-bore ayan une structure quadratique présente la stoechiométrie représentée par

$$Fe_a(Nd,Pr)_b B_c (Si,Al)_d$$

dans laquelle a est de 75 à 80, b est de 10 à 14, c est de 5 à 10 et d est de 0,5 à 5,0.

5. Alliage magnétique selon la revendication 4, caractérisé en ce que les occupances du site bore et les paramètres de réseau. normalisés pour Fe(6), présentent un déplacement par rapport aux occupances du site du bore et aux paramètres de réseau dans le réseau $RE_2 Fe_{14} B_1$.

6. Alliage magnétique selon l'une des revendications précédentes, caractérisé en ce que l'alliage à une coercivité à la température ambiante supérieure à 8 kilooersteds (1 kOe = 79.6 kA/m).

7. Alliage magnétique selon l'une des revendications précédentes, caractérisé en ce que l'alliage a un rémanence supérieure à 9 kilogauss (1G = $10^{-4}$ T)

8. Alliage magnétique seion l'une des revendications précédentes, caractérisé en ce qu'il a un paramètre de rétention magnétique isotrope (Q) supérieur à 1,0.

9. Alliage magnétique selon l'une des revendications précédentes, caractérisé en ce qu'il a une coercivité isotrope à la température ambiante supérieure à 8,0 kilooersteds (1 kOe = 79.6 kA/m).

**10.** Alliage selon l'une des revendications précédentes, caractérisé en ce qu'il a une rémanence isotrope supérieure à 9.0 kilogauss (1 G = $10^{-4}$ T).

FIG. IA

FIG. IB

EP 0 195 219 B2

FIG. 2

FIG. 3

38

*FIG. 4*

*FIG. 5*

FIG. 6
BH ENERGY PRODUCT VS
CHILLSURFACE VELOCITY

FIG. 7
REMNANCE VS
SURFACE VELOCITY

FIG. 8
COERCIUE FORCE VS
CHILLSURFACE VELOCITY

REVOLUTIONS PER MIN. ( 20" DIAMETER )

40

FIG. 9

41

FIG. IO

FIG. II

FIG. 12

## FIG. 13

EP 0 195 219 B2

FIG. 14

FIG. 15A

FIG. 15B

47

FIG. 16
ENERGY PRODUCT VS
CHILLSURFACE VELOCITY

FIG. 17
REMNANCE VS CHILLSURFACE VELOCITY

FIG. 18
ERCIVITY VS
CHILLSURFACE VELOCITY

MEGA GAUSS OERSTED

KILO GAUSS

KILO OERSTED

REVOLUTIONS PER MIN. ( 20" DIAMETER )

FIG. 19

M ( KG )

H ( KOE )

FIG. 20

FIG. 21

FIG. 22

M ( KG )

H ( KOE )

FIG. 23

EP 0 195 219 B2

FIG. 24

FIG. 25

M ( KG )

H ( KOE )

EP 0 195 219 B2

## FIG. 26

FIG. 27A

FIG. 27B

FIG. 28A

FIG. 28B

# BH-MAX vs. WHEEL SPEED

FIG. 29

BH-MAX
(MG-OE)

Y-axis: 11, 12, 13, 14, 15, 16, 17, 18, 19

X-axis: WHEEL SPEED (M/SEC) — 20, 22, 24, 26, 28, 30

SAMPLE 477ABØ1

□ — 0% NON SI          ◊ — 1.5% NON SI          △ — 1.5% NON SI

EP 0 195 219 B2

FIG. 30

EP 0 195 219 B2

FIG. 31

EP 0 195 219 B2

FIG. 32

62

FIG. 33

10.0U

FIG. 34

EP 0 195 219 B2

FIG. 35

M ( KG )

H ( KOE )

*FIG. 36*

M ( KG )

H ( KOE )

FIG. 37

M (KG)

H (KOE)

EP 0 195 219 B2

FIG. 38

50 nm

FIG. 39

FIG. 40

FIG. 42

FIG. 41

FIG. 43

100 nm

FIG. 44

FIG. 45

# FIG. 46

SIGMA: I INCH = I.000E + 04 GAUSS

H: I INCH = 5.000E + 03 Oe